(19) Europäisches Patentamt
European Patent Office
Office européen des brevets

(11) **EP 2 182 010 A1**

(12) **EUROPEAN PATENT APPLICATION**
published in accordance with Art. 153(4) EPC

(43) Date of publication:
**05.05.2010 Bulletin 2010/18**

(21) Application number: **08827871.8**

(22) Date of filing: **21.08.2008**

(51) Int Cl.:
**C08C 1/07** *(2006.01)*    **C08F 265/06** *(2006.01)*
**C08L 51/04** *(2006.01)*    **C08L 101/00** *(2006.01)*

(86) International application number:
**PCT/JP2008/064947**

(87) International publication number:
**WO 2009/025334 (26.02.2009 Gazette 2009/09)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **21.08.2007 JP 2007214714
11.09.2007 JP 2007235285
05.10.2007 JP 2007262083**

(71) Applicant: **UMG ABS, Ltd.
Chuo-ku,
Tokyo 104-6591 (JP)**

(72) Inventors:
• **SHIKISAI, Yoshifumi**
**Ube-shi**
**Yamaguchi 755-8580 (JP)**
• **KONISHI, Naoki**
**Ube-shi**
**Yamaguchi 755-8580 (JP)**
• **MASAKI, Yasuo**
**Ube-shi**
**Yamaguchi 755-8580 (JP)**

(74) Representative: **Plougmann & Vingtoft A/S
Sundkrogsgade 9
P.O. Box 831
2100 Copenhagen Ø (DK)**

(54) **METHOD FOR PRODUCING ENLARGED RUBBER, GRAFT COPOLYMER, THERMOPLASTIC RESIN COMPOSITION AND MOLDED ARTICLE**

(57) A method of producing an enlarged rubber that includes mixing 0.1 to 10 parts by mass of a condensed acid salt (B) and 0.1 to 10 parts by mass of the solid fraction of an acid group-containing copolymer latex (C) with 100 parts by mass of the solid fraction of a rubber-like polymer latex (A). A graft copolymer obtained by polymerization in the presence of an enlarged rubber obtained by the above production method, a thermoplastic resin composition containing the graft copolymer, and a molded item obtained by molding the thermoplastic resin composition. The acid group-containing copolymer latex (C) is a latex of an acid group-containing copolymer obtained by polymerizing, within water, a monomer mixture containing 5 to 30% by mass of an acid group-containing monomer and 95 to 70% by mass of an unsaturated carboxylate ester-based monomer.

EP 2 182 010 A1

**Description**

TECHNICAL FIELD

The present invention relates to a method of producing an enlarged rubber, a graft copolymer, a thermoplastic resin composition containing the graft copolymer, and a molded article prepared by molding the thermoplastic resin composition.

The present invention relates to a graft copolymer, a thermoplastic resin composition containing the graft copolymer, and a molded article prepared by molding the thermoplastic resin composition.

Priority is claimed on Japanese Patent Application No. 2007-214714, filed August 21, 2007, Japanese Patent Application No. 2007-235285, filed September 11, 2007, and Japanese Patent Application No. 2007-262083, filed October 5, 2007, the contents of which are incorporated herein by reference.

BACKGROUND OF THE INVENTION

Conventional examples of known thermoplastic resin compositions that can be used for producing molded items having excellent impact resistance include ABS (acrylonitrile-butadiene-styrene) resins and ASA (acrylate-styrene-acrylonitrile) resins. The thermoplastic resin composition is prepared by blending a graft copolymer into the thermoplastic resin (such as a styrene-acrylonitrile resin, $\alpha$-methylstyrene-acrylonitrile resin or styrene-acrylonitrile-phenyl maleimide resin).

The graft copolymer is obtained by graft polymerization, to a rubber-like polymer, of a monomer capable of forming a polymer that exhibits excellent compatibility with the thermoplastic resin. In order to obtain a molded item with excellent impact resistance, the average particle size of the rubber-like polymer must be controlled within an appropriate range. If the average particle size of the rubber-like polymer is too small, then satisfactory impact resistance is not achievable, and therefore a rubber-like polymer having an average particle size of 150 to 400 nm is typically used. However, recently, there are growing demands for the use of rubber-like polymers having an average particle size of 600 nm or greater, which are used for purposes such as imparting specific design properties to the molded item.

The average particle size of a rubber-like polymer contained within a rubber-like polymer latex obtained by emulsion polymerization is closely related to the time of the emulsion polymerization. For example, in order to produce a rubber-like polymer having an average particle size of 600 nm or greater by emulsion polymerization, a polymerization time of at least several tens of hours is required, meaning the productivity is extremely poor. Accordingly, a rubber-like polymer having an average particle size of less than 150 nm is usually prepared in advance, and this rubber-like polymer is then enlarged using an appropriate method to produce the enlarged rubber.

Examples of known methods used for producing the enlarged rubber include the methods listed below.

(1) A method in which an acid compound is added to the rubber-like polymer latex (see Patent Documents 1 and 2).
(2) A method in which an acid group-containing diene or an acid group-containing copolymer latex is added, either during the production or following the production of a rubber-like polymer latex (see Patent Documents 3 to 6).
(3) A method in which an acid group-containing copolymer latex and an electrolyte are added to a rubber-like polymer latex (see Patent Documents 7 and 8).

However, in the method (1), a problem arises in that the concentration of the latex must be thinned in order to avoid the generation of agglomerates, resulting in a deterioration in productivity.

In the method (2), a large number of acid groups must be introduced into the copolymer in order to produce an enlarged rubber having an average particle size of 600 nm or greater. However this tends to result in the generation of a large amount of agglomerates when producing the acid group-containing copolymer.

The method (3) is unable to produce an enlarged rubber having an average particle size of 600 nm or greater.

[Patent Document 1]
Japanese Examined Patent Application, Second Publication No. Sho 42-3112
[Patent Document 2]
Japanese Examined Patent Application, Second Publication No. Hei 2-9601
[Patent Document 3]
Japanese Examined Patent Application, Second Publication No. Sho 56-45921
[Patent Document 4]
Japanese Unexamined Patent Application, First Publication No. Hei 1-126301
[Patent Document 5]
Japanese Unexamined Patent Application, First Publication No. Hei 3-212401

[Patent Document 6]
Japanese Unexamined Patent Application, First Publication No. Hei 8-59704
[Patent Document 7]
Japanese Unexamined Patent Application, First Publication No. Sho 56-166201
[Patent Document 8]
Japanese Unexamined Patent Application, First Publication No. Hei 4-220452

Furthermore, in recent years, there have been growing demands for materials having dramatically reduced gloss, so-called matte materials, for use within internal components for automobiles (such as dashboards and instrument panels), furniture, electrical equipment housings, and resin-based construction materials for housing.
Molded items formed from thermoplastic resins generally have a luster, meaning an appropriate method must be used to remove the luster of the molded item. Examples of known methods used for removing the luster from a molded item formed from a thermoplastic resin include the methods listed below.

(4) A method in which the molded item is subjected to a patterning process or delustering process.
(5) A method in which a delustering agent such as an inorganic material or organic material is added to the thermoplastic resin.

The method (4) offers the advantage that any deterioration in the physical properties of the molded item is minimal. However, in the method (4), the productivity associated with producing the matte molded item is poor, meaning the processing costs tend to be high, and the delustering effect is often inadequate. Furthermore, the method (4) is often unsuitable in applications where secondary processing is performed.
The method (5) suffers no significant deterioration in the productivity, can be used to control the degree of delustering, and can also be used within applications that include secondary processing. However, the method (5) suffers a significant problem in that, depending on the nature of the delustering agent, the physical properties of the molded item tend to deteriorate. Particularly in those cases where an inorganic material such as a silica gel is used as the delustering agent, the deterioration in physical properties such as the impact resistance and strength-elongation tends to be considerable.
Examples of organic delustering agents that have been proposed include the delustering agents listed below.

(6) Delustering agents that use a cross-linked polymer (for example, see Patent Documents 9 to 13).
(7) Delustering agents that use a polymer having specific functional groups (such as hydroxyl groups or the like) (for example, see Patent Documents 14 and 15).

However, with the delustering agents of (6) above, the decrease in the impact resistance of the molded item is marked, meaning there is a limit to the use of such delustering agents.
The delustering agents of (7) above also suffer from unsatisfactory impact resistance and inferior surface appearance of the molded item.

[Patent Document 9]
Japanese Unexamined Patent Application, First Publication No. Sho 50-051142
[Patent Document 10]
Japanese Unexamined Patent Application, First Publication No. Sho 54-117550
[Patent Document 11]
Japanese Unexamined Patent Application, First Publication No. Sho 56-036535
[Patent Document 12]
Japanese Unexamined Patent Application, First Publication No. Sho 60-049052
[Patent Document 13]
Japanese Unexamined Patent Application, First Publication No. Hei 04-345646
[Patent Document 14]
Japanese Unexamined Patent Application, First Publication No. Hei 07-314615
[Patent Document 15]
Japanese Unexamined Patent Application, First Publication No. Hei 07-316374

Furthermore, increasing the impact resistance of molded items not only expands the potential applications for such molded items, but also raises the industrial applicability, by enabling the molded items to be made with thinner walls or in larger sizes. As a result, numerous techniques have been proposed for improving the impact resistance of molded items.
Amongst such techniques for improving the impact resistance of molded items, a technique that employs a thermoplastic resin composition containing a combination of a rubber-like polymer and a polymer that does not include a rubber-like polymer is already used in industrial settings.

Examples of the thermoplastic resin composition include acrylonitrile-butadiene-styrene resins (ABS resins), high-impact polystyrene resins (HIPS resins), acrylonitrile-styrene-acrylate ester resins (ASA resins), modified polyphenylene-ether resins (modified PPE resins), methyl methacrylate-butadiene-styrene resin (MBS resin), and reinforced polyvinyl chloride resins.

Examples of thermoplastic resin compositions that have been proposed as compositions capable of yielding matte molded items include the thermoplastic resin compositions described below.

(8) Thermoplastic resin compositions containing a cross-linked polymer (for example, see Patent Documents 11, and 16 to 23).

However, molded items formed from the thermoplastic resin compositions of (8) above suffer from a marked deterioration in the impact resistance, and there is therefore a limit to the potential applications of thermoplastic resin compositions of (8). Moreover, in recent years, the impact resistance properties required of molded items have become more stringent, and molded items formed from thermoplastic resin compositions of (8) above are increasingly unable to meet these requirements.

Examples of thermoplastic resin compositions that have been proposed as compositions capable of producing matte molded items for which any deterioration in impact resistance has been suppressed include the thermoplastic resin compositions described below.

(9) Thermoplastic resin compositions containing a rubber-like polymer having a large particle size (for example, see Patent Documents 24 to 28).

Because the thermoplastic resin compositions of (9) above include a rubber-like polymer having a large particle size, any deterioration in the impact resistance of the molded item can be suppressed. However, with the thermoplastic resin compositions of (9), the matte properties of the molded item are highly dependent on the molding conditions, meaning the molded item tends to be prone to differences in the gloss within different regions of the item, resulting in mottling.

Examples of thermoplastic resin compositions that have been proposed as compositions for which the molding condition dependency of the matte properties is small, meaning the composition is capable of producing molded items with minimal mottling, include the thermoplastic resin compositions described below.

(10) Thermoplastic resin compositions containing a polymer having reactive functional groups (for example, see Patent Documents 29 to 35).

However, because the thermoplastic resin compositions of (10) above include a polymer having reactive functional groups, the reduction in the fluidity of the thermoplastic resin composition is dramatic, meaning the molding process often becomes an obstacle.

As described above, there are strong demands for a thermoplastic resin composition that is capable of producing a molded item having excellent impact resistance, surface appearance and matte properties, and also exhibits excellent fluidity and minimal molding condition dependency for the matte properties.

[Patent Document 16]
Japanese Unexamined Patent Application, First Publication No. Sho 53-071146
[Patent Document 17]
Japanese Unexamined Patent Application, First Publication No. Sho 59-161459
[Patent Document 18]
Japanese Unexamined Patent Application, First Publication No. Sho 63-086756
[Patent Document 19]
Japanese Unexamined Patent Application, First Publication No. Sho 63-297449
[Patent Document 20]
Japanese Unexamined Patent Application, First Publication No. Hei 08-073686
[Patent Document 21]
Japanese Unexamined Patent Application, First Publication No. Hei 08-253641
[Patent Document 22]
Japanese Unexamined Patent Application, First Publication No. Hei 08-199027
[Patent Document 23]
Japanese Laid-Open Patent Application No. 2000-212293
[Patent Document 24]
Japanese Unexamined Patent Application, First Publication No. Hei 02-214712
[Patent Document 25]
Published Japanese Translation No. Hei 02-503322 of PCT
[Patent Document 26]
Published Japanese Translation No. Hei 11-508960 of PCT

[Patent Document 27]
Japanese Unexamined Patent Application, First Publication No. Hei 09-194656
[Patent Document 28]
Japanese Laid-Open Patent Application No. 2000-198905
[Patent Document 29]
Japanese Unexamined Patent Application, First Publication No. Sho 60-018536
[Patent Document 30]
Japanese Unexamined Patent Application, First Publication No. Sho 61-236850
[Patent Document 31]
Japanese Unexamined Patent Application, First Publication No. Sho 63-156847
[Patent Document 32]
Japanese Unexamined Patent Application, First Publication No. Sho 63-156851
[Patent Document 33]
Japanese Unexamined Patent Application, First Publication No. Hei 01-056762
[Patent Document 34]
Japanese Unexamined Patent Application, First Publication No. Hei 01-101355
[Patent Document 35]
Japanese Unexamined Patent Application, First Publication No. Hei 10-219079

DISCLOSURE OF THE INVENTION

PROBLEMS TO BE SOLVED BY THE INVENTION

The present invention provides a method of producing an enlarged rubber having a mass average particle size of 600 nm or greater with good productivity.

Furthermore, the present invention also provides a graft copolymer that is able to impart favorable matte properties to a molded item without impairing the impact resistance or surface appearance of the molded item, and is also able to improve the fluidity and the molding condition dependency of the matte properties for a thermoplastic resin composition; a thermoplastic resin composition that is capable of producing a molded item having excellent impact resistance, surface appearance and matte properties, and also exhibits excellent fluidity and minimal molding condition dependency for the matte properties; and a molded item that exhibits excellent impact resistance, surface appearance and matte properties.

MEANS TO SOLVE THE PROBLEMS

A method of producing an enlarged rubber according to the present invention is a method of producing an enlarged rubber having a mass average particle size of 0.6 to 3 $\mu$m by enlarging the rubber-like polymer by mixing a rubber-like polymer latex (A), a condensed acid salt (B) and an acid group-containing copolymer latex (C) described below, wherein the amount of the condensed acid salt (B) is within a range from 0.1 to 10 parts by mass relative to 100 parts by mass of the solid fraction of the rubber-like polymer latex (A), and the amount of the solid fraction of the acid group-containing copolymer latex (C) is within a range from 0.1 to 10 parts by mass.

Acid group-containing copolymer latex (C): a latex of an acid group-containing copolymer obtained by polymerizing, within water, a monomer mixture containing 5 to 30% by mass of an acid group-containing monomer and 95 to 70% by mass of an unsaturated carboxylate ester-based monomer.

The condensed acid salt (B) is preferably a salt of pyrophosphoric acid and an alkali metal.

A graft copolymer (I') of the present invention is obtained by polymerizing 10 to 90 parts by mass of a monomer component containing 50 to 100% by mass of an unsaturated carboxylate ester-based monomer in the presence of 10 to 90 parts by mass of an enlarged rubber described below (wherein the combination of the enlarged rubber and the monomer component is 100 parts by mass).

Enlarged rubber: an enlarged rubber having a mass average particle size of 0.6 to 3 $\mu$m, obtained by enlarging the rubber-like polymer by mixing a rubber-like polymer latex (A), a condensed acid salt (B) in an amount of 0.1 to 10 parts by mass per 100 parts by mass of the solid fraction of the rubber-like polymer latex (A), and an acid group-containing copolymer latex (C) described below, in an amount equivalent to 0.1 to 10 parts by mass of the solid fraction of the copolymer latex per 100 parts by mass of the solid fraction of the rubber-like polymer latex (A).

Acid group-containing copolymer latex (C): a latex of an acid group-containing copolymer obtained by polymerizing, within water, a monomer mixture containing 5 to 30% by mass of an acid group-containing monomer and 95 to 70% by mass of an unsaturated carboxylate ester-based monomer.

The rubber-like polymer latex (A) is preferably a (meth)acrylate ester-based rubber latex.

A thermoplastic resin composition of the present invention includes 3 to 70 parts by mass of the graft copolymer (I') of the present invention, and 30 to 97 parts by mass of a polymer (III) described below and/or another thermoplastic resin (wherein the combination of the graft copolymer and the polymer (III) and/or another thermoplastic resin is 100 parts by mass).

Polymer (III): a polymer including no rubber-like polymers, obtained by polymerizing a monomer component containing at least one monomer selected from the group consisting of unsaturated nitrile-based monomers, aromatic vinyl-based monomers and unsaturated carboxylate ester-based monomers.

Another thermoplastic resin mentioned above is preferably a vinyl chloride resin.

A molded item of the present invention is either an item produced by molding the thermoplastic resin composition of the present invention, or an item having a coating layer formed from the thermoplastic resin composition of the present invention on the surface of a molded item body.

The molded item of the present invention is preferably an extrusion molded item.

A graft copolymer (I) of the present invention is obtained by polymerizing 10 to 90 parts by mass of a monomer mixture including 3 to 50% by mass of an unsaturated nitrile-based monomer and 20 to 97% by mass of an aromatic vinyl-based monomer in the presence of 10 to 90 parts by mass of an enlarged rubber described below (wherein the combination of the enlarged rubber and the monomer mixture is 100 parts by mass).

Enlarged rubber: an enlarged rubber having a mass average particle size of 0.6 to 3 $\mu$m, obtained by enlarging the rubber-like polymer by mixing a rubber-like polymer latex (A), a condensed acid salt (B) in an amount of 0.1 to 10 parts by mass per 100 parts by mass of the solid fraction of the rubber-like polymer latex (A), and an acid group-containing copolymer latex (C) described below, in an amount equivalent to 0.1 to 10 parts by mass of the solid fraction of the copolymer latex per 100 parts by mass of the solid fraction of the rubber-like polymer latex (A).

Acid group-containing copolymer latex (C): a latex of an acid group-containing copolymer obtained by polymerizing, within water, a monomer mixture containing 5 to 30% by mass of an acid group-containing monomer and 95 to 70% by mass of an unsaturated carboxylate ester-based monomer.

The rubber-like polymer latex (A) is preferably a (meth)acrylate ester-based rubber latex.

Further, the graft copolymer (I) preferably has a graft ratio of 20 to 50% by mass, and a mass average molecular weight for the acetone-soluble fraction within the graft rubber of 100,000 to 500,000.

A thermoplastic resin composition of the present invention includes 10 to 70% by mass of the graft copolymer (I) of the present invention and 30 to 90% by mass of a polymer (III) described below within the thermoplastic resin composition (100% by mass). If required, the composition may also include 0 to 50% by mass of a graft copolymer (II) described below.

Graft copolymer (II): a graft copolymer (excluding the graft copolymer (I)) obtained by polymerizing, in the presence of a rubber-like polymer, a monomer component containing at least one monomer selected from the group consisting of unsaturated nitrile-based monomers, aromatic vinyl-based monomers and unsaturated carboxylate ester-based monomers.

Polymer (III): a polymer including no rubber-like polymers, obtained by polymerizing a monomer component including at least one monomer selected from the group consisting of unsaturated nitrile-based monomers, aromatic vinyl-based monomers and unsaturated carboxylate ester-based monomers.

The polymer (III) is a polymer obtained by polymerizing a monomer component including 3 to 50% by mass of an unsaturated nitrile-based monomer and 20 to 97% by mass of an aromatic vinyl-based monomer; or a polymer obtained by polymerizing a monomer component containing 50 to 100% by mass of an unsaturated carboxylate ester-based monomer; or a mixture of a polymer obtained by polymerizing a monomer component containing an unsaturated nitrile-based monomer and an aromatic vinyl-based monomer, and a polymer obtained by polymerizing a monomer component containing an unsaturated carboxylate ester-based monomer.

In those cases where the polymer (III) is a mixture, a mixture of a polymer obtained by polymerizing a monomer component including 3 to 50% by mass of an unsaturated nitrile-based monomer and 20 to 97% by mass of an aromatic vinyl-based monomer, and a polymer obtained by polymerizing a monomer component containing 50 to 100% by mass of an unsaturated carboxylate ester-based monomer is preferred.

A molded item of the present invention is either an item produced by molding the thermoplastic resin composition of the present invention, or an item having a coating layer formed from the thermoplastic resin composition of the present invention on the surface of a molded item body.

The molded item of the present invention is preferably an extrusion molded item.

EFFECT OF THE INVENTION

According to a method of producing an enlarged rubber of the present invention, an enlarged rubber having a mass average particle size of 600 nm or greater can be produced with good productivity.

Further, according to a graft copolymer of the present invention, a molded item can be imparted with favorable matte properties without impairing the impact resistance or surface appearance of the molded item, and the fluidity of a thermoplastic resin composition and the molding condition dependency of the matte properties can also be improved. According to a thermoplastic resin composition of the present invention, a molded item having excellent impact resistance, surface appearance and matte properties can be obtained. The thermoplastic resin composition of the present invention also exhibits excellent fluidity and minimal molding condition dependency for the matte properties.

A molded item of the present invention exhibits excellent impact resistance, surface appearance and matte properties.

BEST MODE FOR CARRYING OUT THE INVENTION

In this description, the term "(meth)acrylate" is a generic term that means either "acrylate" or "methacrylate".

(Rubber-like polymer latex (A))

The rubber-like polymer latex (A) is a latex in which particles of a rubber-like polymer are dispersed within water.

Examples of the rubber-like polymer latex (A) include (meth)acrylate ester-based rubber latexes, ethylene-propylene rubber (EPR) latexes, ethylene-propylene-diene-based rubber (EPDM) latexes, diene-based rubber latexes and polyorganosiloxane latexes. In order to produce an ASA resin or the like that yields a molded item having excellent weather resistance, a (meth)acrylate ester-based rubber latex, butadiene-(meth)acrylate ester copolymer latex, EPR latex, EPDM latex, or polyorganosiloxane latex is preferred, and a (meth)acrylate ester-based rubber latex is particularly desirable.

Two or more types of rubber-like polymers may be used in combination, or two or more types of rubber-like polymers may be complexed. Using two or more types in combination means that the two or more types of rubber-like polymers have no chemical or physical bonds linking the two polymers. A complex of two or more types means that the two or more types of rubber-like polymers are bonded together at the micro-level either via close physical contact or via chemical bonding. The rubber-like polymer may be selected in accordance with the intended application.

A (meth)acrylate ester-based rubber latex can be obtained by polymerizing, within water, a monomer component containing a (meth)acrylate ester, one or more other monomers if required, a graft crossing agent, and a cross-linking agent.

As the (meth)acrylate ester, alkyl (meth)acrylates having an alkyl group of 1 to 12 carbon atoms are preferred, and specific examples include alkyl methacrylates (such as methyl methacrylate, ethyl methacrylate, propyl methacrylate, n-butyl methacrylate, isobutyl methacrylate, t-butyl methacrylate, 2-ethylhexyl methacrylate, and lauryl methacrylate) and alkyl acrylates (such as methyl acrylate, ethyl acrylate, propyl acrylate, n-butyl acrylate, isobutyl acrylate, t-butyl acrylate, and 2-ethylhexyl acrylate), and of these, n-butyl acrylate or 2-ethylhexyl acrylate is particularly desirable. A single type of (meth)acrylate ester may be used alone, or two or more types may be used in combination.

The proportion of the (meth)acrylate ester within the monomer component (100% by mass) is preferably within a range from 50 to 100% by mass, and in terms of ensuring excellent impact resistance for the molded item, is more preferably within a range from 60 to 99.9% by mass, and still more preferably from 70 to 99.9% by mass.

Examples of the other monomer include aromatic vinyl-based monomers (such as styrene, α-methylstyrene and vinyltoluene), unsaturated nitrile-based monomers (such as acrylonitrile and methacrylonitrile), other (meth)acrylate esters containing a functional group (such as 2-hydroxyethyl methacrylate, glycidyl methacrylate and N,N-dimethylaminoethyl methacrylate), diene-based compounds (such as butadiene, chloroprene and isoprene), acrylamide, methacrylamide, maleic anhydride and N-substituted maleimides. Any one of these other monomers may be used alone, or two or more monomers may be used in combination.

The proportion of the other monomer within the monomer component (100% by mass) is preferably within a range from 0 to 50% by mass, and in terms of ensuring excellent impact resistance for the molded item, is more preferably within a range from 0 to 39.9% by mass, and still more preferably from 0 to 29.9% by mass.

Examples of the cross-linking agent and the graft crossing agent include allyl compounds (such as allyl methacrylate, triallyl cyanurate and triallyl isocyanurate), divinylbenzene, di(meth)acrylate ester compounds (such as ethylene glycol dimethacrylate, propylene glycol dimethacrylate, 1,3-butylene glycol dimethacrylate, 1,4-butylene glycol dimethacrylate, and 1,6-hexyl diacrylate). A combination of an allyl compound as a graft crossing agent and a di(meth)acrylate ester compound as a cross-linking agent is preferred, and a combination of allyl methacrylate and 1,3-butylene glycol dimethacrylate is particularly desirable.

The proportion of the graft crossing agent and the cross-linking agent within the monomer component (100% by mass) is preferably within a range from 0.1 to 5% by mass.

In terms of ensuring a favorable balance between the impact resistance and matte properties for the molded item, the proportion of the graft crossing agent and the cross-linking agent within the monomer component (100% by mass) is more preferably within a range from 0.1 to 3% by mass, and still more preferably from 0.1 to 1% by mass.

The rubber-like polymer latex (A) is preferably produced by an emulsion polymerization.

In those cases where two or more rubber-like polymers are used in combination, two rubber-like polymer latexes may be mixed together, or a rubber-like polymer may be produced in the presence of one or more other rubber-like polymers. The mass average particle size of the rubber-like polymer contained within the rubber-like polymer latex (A) is preferably not more than 0.15 μm, and is more preferably 0.12 μm or less. Preparing a rubber-like polymer having a large mass average particle size in advance is undesirable as the productivity tends to be poor.

(Condensed acid salt (B))

The condensed acid salt (B) is a salt of a condensed acid and an alkali metal and/or alkaline earth metal. The condensed acid is an acid with a polynuclear structure obtained by condensing an oxo acid. Examples of the condensed acid include polyphosphoric acids (such as pyrophosphoric acid).
As the condensed acid salt (B), a salt of pyrophosphoric acid and an alkali metal and/or alkaline earth metal is preferred, a salt of pyrophosphoric acid and an alkali metal is more preferred, and sodium pyrophosphate or potassium pyrophosphate is particularly desirable.

(Acid group-containing copolymer latex (C))

The acid group-containing copolymer latex (C) is a latex of an acid group-containing copolymer obtained by polymerizing, within water, a monomer mixture containing 5 to 30% by mass of an acid group-containing monomer, 95 to 70% by mass of an unsaturated carboxylate ester-based monomer, and if required 0 to 25% by mass of one or more other monomers capable of copolymerizing with the above monomers (combined total of all monomers: 100% by mass).
The acid group-containing monomer is preferably an unsaturated compound having a carboxyl group, specific examples include (meth)acrylic acid, itaconic acid and crotonic acid, and of these, (meth)acrylic acid is particularly desirable. A single type of acid group-containing monomer may be used alone, or two or more types may be used in combination.
The unsaturated carboxylate ester-based monomer is preferably an alkyl (meth)acrylate, and is more preferably an alkyl (meth)acrylate having an alkyl group of 1 to 12 carbon atoms.
Examples of the alkyl (meth)acrylate include esters produced from acrylic acid or methacrylic acid, and an alcohol having a linear or branched alkyl group of 1 to 12 carbon atoms. Specific examples of the alkyl (meth)acrylate include methyl acrylate, ethyl acrylate, propyl acrylate, n-butyl acrylate, isobutyl acrylate, t-butyl acrylate, 2-ethylhexyl acrylate, methyl methacrylate, ethyl methacrylate, propyl methacrylate, n-butyl methacrylate, isobutyl methacrylate, t-butyl methacrylate, and 2-ethylhexyl methacrylate, and of these, alkyl (meth)acrylates having an alkyl group of 1 to 8 carbon atoms are particularly desirable.
A single type of unsaturated carboxylate ester-based monomer may be used alone, or two or more types may be used in combination.
The other monomer refers to a monomer that is capable of copolymerization with the acid group-containing monomer and the unsaturated carboxylate ester-based monomer, but excludes acid group-containing monomers and unsaturated carboxylate ester-based monomers.
Examples of the other monomer include aromatic vinyl-based monomers (such as styrene, α-methylstyrene and p-methylstyrene), unsaturated nitrile-based monomers (such as acrylonitrile and methacrylonitrile), and compounds having two or more polymerizable functional groups (such as allyl methacrylate, polyethylene glycol dimethacrylate, triallyl cyanurate, triallyl isocyanurate and triallyl trimellitate). Any one of these other monomers may be used alone, or two or more monomers may be used in combination.
The proportion of the acid group-containing monomer within the monomer mixture (100% by mass) is typically within a range from 5 to 30% by mass, and is preferably from 8 to 25% by mass. Provided the proportion of the acid group-containing monomer is at least 5% by mass, the rubber-like polymer can be enlarged satisfactorily. Provided the proportion of the acid group-containing monomer is not more than 30% by mass, the generation of agglomerates can be suppressed during production of the acid group-containing copolymer latex (C).
The proportion of the unsaturated carboxylate ester-based monomer within the monomer mixture (100% by mass) is typically within a range from 70 to 95% by mass, and is preferably from 75 to 92% by mass.
The proportion of the other monomer within the monomer mixture (100% by mass) is typically within a range from 0 to 25% by mass, and is preferably from 0 to 20% by mass.
The acid group-containing polymer latex (C) is preferably produced by an emulsion polymerization.
The emulsifying agent used in the emulsion polymerization is preferably an anionic emulsifying agent or the like.
Specific examples of the anionic emulsifying agent include carboxylate salts (such as alkali metal salts of fatty acids (such as oleic acid, palmitic acid, stearic acid and rosin acid) and alkali metal salts of alkenylsuccinic acids), as well as alkyl sulfates, sodium alkylbenzene sulfonates, sodium alkyl sulfosuccinates, and sodium polyoxyethylene nonylphenyl ether sulfate.

A single type of emulsifying agent may be used alone, or two or more types may be used in combination.

The entire amount of the emulsifying agent may be added in a single batch at the start of the polymerization, or a portion may be added at the start of the polymerization, with the remainder being added intermittently or continuously throughout the course of the polymerization.

By altering the amount of the emulsifying agent and the manner in which the emulsifying agent is added, the mass average particle size of the acid group-containing polymer contained within the acid group-containing polymer latex (C) and the mass average particle size of the enlarged rubber can be altered.

Examples of the polymerization initiator used in the emulsion polymerization include thermal decomposition type initiators and redox type initiators.

Specific examples of the thermal decomposition type initiators include potassium persulfate, sodium persulfate and ammonium persulfate.

Specific examples of the redox type initiators include combinations such as an organic peroxide (such as cumene hydroperoxide) - sodium formaldehyde sulfoxylate - iron salt combination.

A single polymerization initiator may be used alone, or two or more initiators may be used in combination.

During the emulsion polymerization, a chain transfer agent that regulates the molecular weight (such as a mercaptan (such as t-dodecylmercaptan or n-octylmercaptan), terpinolene, or $\alpha$-methylstyrene dimer), and alkali or acid that regulates the pH, or an electrolyte that functions as a viscosity reducing agent may also be used.

The mass average particle size of the acid group-containing polymer contained within the acid group-containing polymer latex (C) is preferably not more than 0.2 $\mu$m, and more preferably 0.15 $\mu$m or less. If the mass average particle size of the acid group-containing polymer is large, then the stability of the acid group-containing polymer latex tends to deteriorate, but provided the mass average particle size of the acid group-containing polymer is not more than 0.2 $\mu$m, the acid group-containing polymer can be produced with good suppression of agglomerates.

(Enlarged rubber)

The enlarged rubber is produced by mixing the rubber-like polymer latex (A), the condensed acid salt (B) and the acid group-containing copolymer latex (C), thereby enlarging the rubber-like polymer.

The method of producing the enlarged rubber is preferably a method that involves adding the condensed acid salt (B) and the acid group-containing copolymer latex (C) to the rubber-like polymer latex (A), and is more preferably a method that involves stirring the rubber-like polymer latex (A) while first the condensed acid salt (B), and then the acid group-containing polymer latex (C) are added to the rubber-like polymer latex (A).

The condensed acid salt (B) is preferably added in the form of an aqueous solution having a concentration of 0.1 to 10% by mass.

The amount of the condensed acid salt (B) is typically within a range from 0.1 to 10 parts by mass, and preferably from 0.5 to 7 parts by mass, per 100 parts by mass of the solid fraction of the rubber-like polymer latex (A). Provided this amount of the condensed acid salt (B) is at least 0.1 parts by mass, the enlargement of the rubber-like polymer proceeds satisfactorily. Provided the amount of the condensed acid salt (B) is not more than 10 parts by mass, the enlargement of the rubber-like polymer proceeds satisfactorily without significantly reducing the concentration of the rubber-like polymer latex (A), with favorable stability of the latex, and with good suppression of the generation of agglomerates.

During the addition of the condensed acid salt (B) to the rubber-like polymer latex (A), the pH of the mixed liquid is preferably at least 7. Provided the pH is at least 7, the enlargement of the rubber-like polymer proceeds satisfactorily, and an enlarged rubber having a mass average particle size of 0.6 $\mu$m or greater can be obtained more readily. An alkali (such as sodium hydroxide or potassium hydroxide) may be used to adjust the pH to a value of 7 or greater.

The acid group-containing polymer latex (C) may be added in a single batch, or may be added dropwise in either a continuous or intermittent manner.

The amount of the acid group-containing polymer latex (C) is preferably sufficient to provide 0.1 to 10 parts by mass, and more preferably 0.3 to 7 parts by mass, of the solid fraction of the acid group-containing copolymer latex (C) per 100 parts by mass of the solid fraction of the rubber-like polymer latex (A). Provided the amount of the solid fraction of the acid group-containing polymer latex (C) is at least 0.1 parts by mass, the enlargement of the rubber-like polymer proceeds satisfactorily, and an enlarged rubber having a mass average particle size of 0.6 $\mu$m or greater can be obtained more readily. Further, the generation of agglomerates is also suppressed. Provided the amount of the solid fraction of the acid group-containing polymer latex (C) is not more than 10 parts by mass, any reduction in the pH of the latex can be suppressed, and the latex can be better stabilized.

In those cases where the enlarged rubber is to exist in combination with small or medium sized particles of rubber, an additional amount of the rubber-like polymer latex (A) may be added following the addition of the acid group-containing polymer latex (C).

The stirring most be appropriately controlled during the rubber enlargement process. Provided the level of stirring is adequate, the enlargement proceeds uniformly, meaning the occurrence of residual rubber-like polymer particles that have not been enlarged can be suppressed, and meaning an enlarged rubber having a mass average particle size of 0.6 μm or greater can be obtained more readily. If the level of stirring is excessive, then the latex may become unstable, resulting in the formation of a large amount of agglomerates.

The temperature during the enlargement process is preferably within a range from 10 to 90˚C, and is more preferably from 20 to 80˚C. Provided the temperature is within a range from 10 to 90˚C, the enlargement of the rubber-like polymer proceeds satisfactorily, and an enlarged rubber having a mass average particle size of 0.6 μm or greater can be obtained more readily.

The mass average particle size of the enlarged rubber is typically within a range from 0.6 to 3 μm, and preferably from 0.6 to 2 μm.

Provided the mass average particle size of the enlarged rubber is at least 0.6 μm, the impact resistance of the molded item is favorable and the molded item also has superior design performance with favorable matte properties. Provided the mass average particle size of the enlarged rubber is not more than 3 μm, there is a stronger tendency for the latex to stabilize, and the generation of agglomerates during the enlargement process can be suppressed.

The enlarged rubber can be used in the production of various styrene-based resins including high-impact polystyrene (HIPS) resins, ABS resins, ASA resins, AES (acrylonitrile-EPDM-styrene) resins and ACS (acrylonitrile-chlorinated polyethylene-styrene) resins; and also in the production of resin compositions such as rubber-reinforced MS (methyl methacrylate-styrene) resins, rubber-reinforced PMMA (methyl methacrylate copolymer) resins, rubber-reinforced vinyl chloride resins and rubber-reinforced polycarbonate resins.

(Graft copolymers (I) and (I'))

The graft copolymers of the present invention (hereafter frequently referred to as the graft copolymers (I) and (I')) are obtained by graft polymerization of a monomer mixture in the presence of an enlarged rubber.

(i) Graft copolymer (I')

The graft copolymer (I') of the present invention is obtained by graft polymerization of a monomer component in the presence of an enlarged rubber.

The monomer component contains an unsaturated carboxylate ester-based monomer and, if required, one or more other monomers.

Examples of the unsaturated carboxylate ester-based monomer include methyl methacrylate, ethyl methacrylate, n-butyl methacrylate, 2-ethylhexyl acrylate, methyl acrylate, ethyl acrylate, n-butyl acrylate, 2-hydroxyethyl methacrylate, glycidyl methacrylate and N,N-dimethylaminoethyl methacrylate, and of these, methyl methacrylate and methyl acrylate are particularly desirable. A single type of unsaturated carboxylate ester-based monomer may be used alone, or two or more types may be used in combination.

The other monomer is a monomer that is capable of copolymerization with the unsaturated carboxylate ester-based monomer, but excludes unsaturated carboxylate ester-based monomers.

Examples of the other monomer include cyanated vinyl-based monomers (such as acrylonitrile and methacrylonitrile), aromatic vinyl-based monomers (such as styrene, α-methylstyrene and vinyltoluene), acrylamide, methacrylamide, maleic anhydride and N-substituted maleimides. Any one of these other monomers may be used alone, or two or more monomers may be used in combination.

The proportion of the unsaturated carboxylate ester-based monomer within the monomer component (100% by mass) is typically within a range from 50 to 100% by mass, and is preferably from 65 to 100% by mass. Provided the proportion of the unsaturated carboxylate ester-based monomer is at least 50% by mass, the occurrence of external appearance defects such as foreign matter on the surface of the molded item can be suppressed.

(ii) Graft copolymer (I)

The monomer mixture contains an unsaturated nitrile-based monomer and an aromatic vinyl-based monomer, and may also contain one or more other monomers if required.

Examples of the unsaturated nitrile-based monomer include acrylonitrile and methacrylonitrile.

Examples of the aromatic vinyl-based monomer include styrene, α-methylstyrene and vinyltoluene.

The other monomer is a monomer that is capable of copolymerization with the unsaturated nitrile-based monomer and the aromatic vinyl-based monomer, but excludes unsaturated nitrile-based monomers and aromatic vinyl-based monomers.

Specific examples of the other monomer include methyl methacrylate, ethyl methacrylate, n-butyl methacrylate, 2-ethylhexyl acrylate, methyl acrylate, ethyl acrylate, n-butyl acrylate, 2-hydroxyethyl methacrylate, glycidyl methacrylate, N,N-dimethylaminoethyl methacrylate, acrylamide, methacrylamide, maleic anhydride and N-substituted maleimides.

Any one of these other monomer may be used alone, or two or more monomers may be used in combination.

In terms of achieving excellent impact resistance for the molded item, a mixture of styrene and acrylonitrile is particularly preferred as the monomer mixture.

The proportion of the unsaturated nitrile-based monomer within the monomer mixture (100% by mass) is typically within a range from 3 to 50% by mass, and preferably from 10 to 40% by mass. Provided the proportion of the unsaturated nitrile-based monomer is at least 3% by mass, the molded item exhibits favorable impact resistance. Provided the proportion of the unsaturated nitrile-based monomer is less than 50% by mass, discoloration of the molded item caused by heat can be suppressed.

The proportion of the aromatic vinyl-based monomer within the monomer mixture (100% by mass) is typically within a range from 20 to 97% by mass, and preferably from 30 to 80% by mass. Provided the proportion of the aromatic vinyl-based monomer is at least 20% by mass, favorable moldability can be achieved. Provided the proportion of the aromatic vinyl-based monomer is not more than 97% by mass, the molded item exhibits favorable impact resistance.

The proportion of the other monomer within the monomer mixture (100% by mass) is typically within a range from 0 to 50% by mass, and preferably from 0 to 40% by mass. Provided the proportion of the other monomer is less than 50% by mass, the occurrence of external appearance defects on the surface of the molded item can be suppressed.

Amongst 100 parts by mass of the combination of the enlarged rubber and the monomer mixture, the enlarged rubber represents 10 to 90 parts by mass and the monomer mixture represents 10 to 90 parts by mass. Provided the amount of the enlarged rubber is at least 10 parts by mass, the impact resistance of the molded item is favorable. Provided the amount of the enlarged rubber is not more than 90 parts by mass, the impact resistance and the matte properties of the molded item are favorable.

Amongst 100 parts by mass of the combination of the enlarged rubber and the monomer mixture, the enlarged rubber preferably represents 30 to 70 parts by mass, and the monomer mixture preferably represents 30 to 70 parts by mass. If the amounts of the enlarged rubber and the monomer mixture satisfy these ranges, then the molded item exhibits a favorable balance of excellent levels of impact resistance and moldability and superior matte properties.

Latexes of the graft copolymers (I) and (I') can be produced by performing an emulsion polymerization of the monomer mixture in the presence of an enlarged rubber latex.

The emulsifying agent used in the emulsion polymerization is preferably an anionic emulsifying agent, as these emulsifying agents ensure excellent latex stability during the emulsion polymerization and enable an improvement in the polymerization rate.

Specific examples of the anionic emulsifying agent include carboxylate salts (such as sodium sarcosinate, potassium fatty acids, sodium fatty acids, dipotassium alkenylsuccinates, and rosin acid soaps), as well as alkyl sulfates, sodium alkylbenzene sulfonates, sodium alkyl sulfosuccinates, and sodium polyoxyethylene nonylphenyl ether sulfate. Furthermore, the emulsifying agent used in the production of the enlarged rubber may also be used without further modification.

Examples of the polymerization initiator used in the emulsion polymerization include peroxides, azo-based initiators, and redox type initiators that combine an oxidizing agent and a reducing agent.

During the emulsion polymerization, a chain transfer agent may also be used to control the graft ratio and the molecular weight of the graft component.

Examples of methods that may be used for adding the monomer during the emulsion polymerization include single batch addition of the entire amount, split addition, and consecutive addition. Combinations of these methods may also be used, such as the case where a portion of the monomer is added as a single batch and the remaining monomer is then added in a consecutive manner. Further, a method in which the monomer is added, the mixture is held for a period, and the polymerization initiator is then added to initiate the polymerization may also be used.

The graft ratio within the graft copolymer (I) is preferably within a range from 20 to 50% by mass, and is more preferably from 30 to 40% by mass. If the graft ratio is at least 30% by mass, then the external appearance tends to be more favorable upon extrusion molding. If the graft ratio is 40% by mass or less, then fluctuations in the surface gloss caused by variation in the extrusion molding conditions tend to be better suppressed. The graft ratio within the graft copolymer (I) can be adjusted by altering the type and amount of the cross-linking agent and graft crossing agent used during production of the rubber-like polymer latex (A), by altering the graft polymerization conditions such as the temperature during the graft polymerization or the time taken for the dropwise addition, or by using a chain transfer agent or the like.

The mass average molecular weight for the acetone-soluble fraction within the graft copolymer (I) is preferably within a range from 100,000 to 500,000, and more preferably from 200,000 to 400,000. If the mass average molecular weight is at least 200,000, then fluctuations in the surface gloss caused by variation in the extrusion molding conditions tend to be better suppressed. If the mass average molecular weight is 400,000 or less, then the external appearance tends to be more favorable upon extrusion molding. The mass average molecular weight for the acetone-soluble fraction within the graft copolymer (I) can be adjusted by altering the type and amount of the cross-linking agent and graft crossing agent used during production of the rubber-like polymer latex (A), by altering the graft polymerization conditions such as the temperature during the graft polymerization or the time taken for the dropwise addition, or by using a chain transfer agent or the like.

An example of the method used for recovering the graft copolymer (I) from the latex of the graft copolymer (I) obtained in the emulsion polymerization is described below.

The latex of the graft copolymer (I) is poured into hot water that has a coagulant dissolved therein, thus solidifying the graft copolymer (I).

Subsequently, the solidified graft copolymer (I) is washed by re-dispersion in water or warm water to generate a slurry, thereby dissolving any emulsifying agent residues that remain within the graft copolymer (I) in the water.

By subsequently dewatering the slurry using a dehydrator or the like, and then drying the resulting solid using a flash dryer or the like, the graft copolymer (I) is recovered as a powder or as particles.

Examples of the coagulant include inorganic acids (such as sulfuric acid, hydrochloric acid, phosphoric acid or nitric acid), and metal salts (such as calcium chloride, calcium acetate or aluminum sulfate). The coagulant is selected in accordance with the variety of emulsifying agent used. For example, in those cases where only a carboxylate salt (such as a fatty acid salt or rosin acid soap) is used as the emulsifying agent, any coagulant may be used. However, in those cases where an emulsifying agent such as a sodium alkylbenzene sulfonate that exhibits stable emulsifying action even under acidic conditions is used, an inorganic acid is unsatisfactory as the coagulant, and a metal salt must be used.

(Graft copolymer (II))

The graft copolymer (II) is a graft polymer (excluding the graft copolymer (I)) obtained by polymerizing a monomer component in the presence of a rubber-like polymer.

Examples of the rubber-like polymer include a (meth)acrylate ester-based rubber, EPR, EPDM, diene-based rubber or polyorganosiloxane.

The mass average particle size of the rubber-like polymer used in the graft copolymer (II) is preferably within a range from 0.05 to 0.6 $\mu$m, and more preferably from 0.1 to 0.5 $\mu$m. Provided the mass average particle size satisfies this range, the high-level impact strength is favorable.

The monomer component contains at least one monomer selected from the group consisting of unsaturated nitrile-based monomers, aromatic vinyl-based monomers and unsaturated carboxylate ester-based monomers, and may also contain one or more other monomers if required.

Examples of the unsaturated nitrile-based monomer include acrylonitrile and methacrylonitrile.

Examples of the aromatic vinyl-based monomer include styrene, $\alpha$-methylstyrene and vinyltoluene.

The unsaturated carboxylate ester-based monomer is preferably an alkyl (meth)acrylate. Examples of the alkyl (meth)acrylate include methyl acrylate, ethyl acrylate, propyl acrylate, n-butyl acrylate, isobutyl acrylate, t-butyl acrylate, 2-ethylhexyl acrylate, methyl methacrylate, ethyl methacrylate, propyl methacrylate, n-butyl methacrylate, isobutyl methacrylate, t-butyl methacrylate and 2-ethylhexyl methacrylate.

The other monomer is a monomer that is capable of copolymerization with the unsaturated nitrile-based monomer, the aromatic vinyl-based monomer and the unsaturated carboxylate ester-based monomer, but excludes unsaturated nitrile-based monomers, aromatic vinyl-based monomers and unsaturated carboxylate ester-based monomers.

Specific examples of the other monomer include acrylamide, methacrylamide, maleic anhydride and N-substituted maleimides.

In terms of obtaining excellent impact resistance for the molded item, the monomer component is preferably a mixture of an unsaturated nitrile-based monomer and an aromatic vinyl-based monomer, and a mixture of styrene and acrylonitrile is particularly desirable.

The proportion of the unsaturated nitrile-based monomer within the monomer component (100% by mass) is preferably within a range from 3 to 50% by mass, and more preferably from 10 to 40% by mass. Provided the proportion of the unsaturated nitrile-based monomer is at least 3% by mass, the molded item exhibits favorable impact resistance. Provided the proportion of the unsaturated nitrile-based monomer is not more than 50% by mass, discoloration of the molded item caused by heat can be suppressed.

The proportion of the aromatic vinyl-based monomer within the monomer component (100% by mass) is preferably within a range from 20 to 97% by mass, and more preferably from 30 to 80% by mass. Provided the proportion of the aromatic vinyl-based monomer is at least 20% by mass, favorable moldability can be achieved.

Provided the proportion of the aromatic vinyl-based monomer is not more than 97% by mass, the molded item exhibits favorable impact resistance.

The proportion of the unsaturated carboxylate ester-based monomer and other monomer(s) within the monomer component (100% by mass) is preferably within a range from 0 to 50% by mass, and more preferably from 0 to 40% by mass. Provided the proportion of these monomers is less than 50% by mass, the occurrence of external appearance defects on the surface of the molded item can be suppressed.

Amongst 100 parts by mass of the combination of the rubber-like polymer and the monomer component, the rubber-like polymer preferably represents 10 to 90 parts by mass and the monomer component preferably represents 10 to 90 parts by mass. Provided the amount of the rubber-like polymer is at least 10 parts by mass, the impact resistance of the molded item is favorable. Provided the amount of the rubber-like polymer is not more than 90 parts by mass, the impact resistance and the matte properties of the molded item are favorable.

Amongst 100 parts by mass of the combination of the rubber-like polymer and the monomer component, the rubber-like polymer more preferably represents 30 to 70 parts by mass, and the monomer component more preferably represents 30 to 70 parts by mass. If the amounts of the rubber-like polymer and the monomer component satisfy these ranges, then the molded item exhibits a favorable balance of excellent levels of impact resistance and moldability and superior matte properties.

Specific examples of the graft copolymer (II) include typical ABS graft copolymers and ASA graft copolymers. The graft copolymer (II) may be of a similar type to the graft copolymer (I), with the exception of having a different mass average particle size for the rubber-like polymer (enlarged rubber), or may be of a different type from the graft copolymer (I) with a different type of rubber-like polymer and/or a different monomer component. In those cases where a graft copolymer of a different type from the graft copolymer (I) is used as the graft copolymer (II), different properties such as low-temperature impact strength and surface hardness can be imparted to the molded item.

A latex of the graft copolymer (II) can be produced by performing an emulsion polymerization of the monomer component in the presence of a rubber-like polymer latex.

The emulsifying agent used in the emulsion polymerization is preferably an anionic emulsifying agent, as these emulsifying agents ensure excellent latex stability during the emulsion polymerization and enable an improvement in the polymerization rate.

Specific examples of the anionic emulsifying agent include carboxylate salts (such as sodium sarcosinate, potassium fatty acids, sodium fatty acids, dipotassium alkenylsuccinates, and rosin acid soaps), as well as alkyl sulfates, sodium alkylbenzene sulfonates, sodium alkyl sulfosuccinates, and sodium polyoxyethylene nonylphenyl ether sulfate. Furthermore, the emulsifying agent used in the production of the rubber-like polymer may also be used without further modification.

Examples of the polymerization initiator used in the emulsion polymerization include peroxides, azo-based initiators, and redox type initiators that combine an oxidizing agent and a reducing agent. Of these, redox type initiators are preferred, and a redox type initiator composed of a ferrous sulfate - sodium pyrophosphate - glucose - hydroperoxide combination, or a redox type initiator composed of a ferrous sulfate - disodium ethylenediamine tetraacetate - sodium formaldehyde sulfoxylate - hydroperoxide combination is particularly desirable.

During the emulsion polymerization, a chain transfer agent may also be used to control the graft ratio and the molecular weight of the graft component.

An example of the method used for recovering the graft copolymer (II) from the latex of the graft copolymer (II) obtained in the emulsion polymerization is described below.

The latex of the graft copolymer (II) is poured into hot water that has a coagulant dissolved therein, thus solidifying the graft copolymer (II).

Subsequently, the solidified graft copolymer (II) is washed by re-dispersion in water or warm water to generate a slurry, thereby dissolving any emulsifying agent residues that remain within the graft copolymer (II) in the water.

By subsequently dewatering the slurry using a dehydrator or the like, and then drying the resulting solid using a flash dryer or the like, the graft copolymer (II) is recovered as a powder or as particles.

Examples of the coagulant include inorganic acids (such as sulfuric acid, hydrochloric acid, phosphoric acid or nitric acid), and metal salts (such as calcium chloride, calcium acetate or aluminum sulfate). The coagulant is selected in accordance with the variety of emulsifying agent used. For example, in those cases where only a carboxylate salt (such as a fatty acid salt or rosin acid soap) is used as the emulsifying agent, any coagulant may be used. However, in those cases where an emulsifying agent such as a sodium alkylbenzene sulfonate that exhibits stable emulsifying action even under acidic conditions is used, an inorganic acid is unsatisfactory as the coagulant, and a metal salt must be used.

(Polymer (III))

The polymer (III) is obtained by polymerizing a monomer component containing at least one monomer selected from the group consisting of unsaturated nitrile-based monomers, aromatic vinyl-based monomers and unsaturated carboxylate ester-based monomers, and is a polymer that does not contain a rubber-like polymer.

The monomer component contains at least one monomer selected from the group consisting of unsaturated nitrile-based monomers, aromatic vinyl-based monomers and unsaturated carboxylate ester-based monomers, and may also contain one or more other monomers if required.

Examples of the unsaturated nitrile-based monomer include acrylonitrile and methacrylonitrile.

Examples of the aromatic vinyl-based monomer include styrene, α-methylstyrene and vinyltoluene.

The unsaturated carboxylate ester-based monomer is preferably an alkyl (meth)acrylate. Examples of the alkyl (meth)acrylate include methyl acrylate, ethyl acrylate, propyl acrylate, n-butyl acrylate, isobutyl acrylate, t-butyl acrylate, 2-ethylhexyl acrylate, methyl methacrylate, ethyl methacrylate, propyl methacrylate, n-butyl methacrylate, isobutyl methacrylate, t-butyl methacrylate and 2-ethylhexyl methacrylate.

The other monomer is a monomer that is capable of copolymerization with the unsaturated nitrile-based monomer, the aromatic vinyl-based monomer and the unsaturated carboxylate ester-based monomer, but excludes unsaturated nitrile-based monomers, aromatic vinyl-based monomers and unsaturated carboxylate ester-based monomers. Specific examples of the other monomer include acrylamide, methacrylamide, maleic anhydride and N-substituted maleimides.

The polymer (III) is preferably one of the polymers (III-a) to (III-c) described below.

Polymer (III-a): a polymer obtained by polymerizing a monomer component containing an unsaturated nitrile-based monomer and an aromatic vinyl-based monomer, and also containing one or more other monomers if required.

Polymer (III-b): a polymer obtained by polymerizing a monomer component containing an unsaturated carboxylate ester-based monomer, and also containing one or more other monomers if required.

Polymer (III-c): a mixture of a polymer obtained by polymerizing a monomer component containing an unsaturated nitrile-based monomer and an aromatic vinyl-based monomer, and also containing one or more other monomers if required, and a polymer obtained by polymerizing a monomer component containing an unsaturated carboxylate ester-based monomer, and also containing one or more other monomers if required.

Polymer (III-a)

The proportion of the unsaturated nitrile-based monomer within the monomer component (100% by mass) is preferably within a range from 3 to 50% by mass, and more preferably from 10 to 40% by mass. Provided the proportion of the unsaturated nitrile-based monomer is at least 3% by mass, the impact resistance of the molded item is favorable. Provided the proportion of the unsaturated nitrile-based monomer is not more than 50% by mass, discoloration of the molded item caused by heat can be suppressed.

The proportion of the aromatic vinyl-based monomer within the monomer component (100% by mass) is preferably within a range from 20 to 97% by mass, and more preferably from 30 to 80% by mass. Provided the proportion of the aromatic vinyl-based monomer is at least 20% by mass, favorable moldability can be achieved. Provided the proportion of the aromatic vinyl-based monomer is not more than 97% by mass, the molded item exhibits favorable impact resistance.

The proportion of the other monomer within the monomer component (100% by mass) is preferably within a range from 0 to 50% by mass, and more preferably from 0 to 40% by mass. Provided the proportion of the other monomer is less than 50% by mass, the occurrence of external appearance defects on the surface of the molded item can be suppressed.

Polymer (III-b)

The proportion of the unsaturated carboxylate ester-based monomer within the monomer component (100% by mass) is preferably within a range from 50 to 100% by mass, and more preferably from 70 to 100% by mass. Provided the proportion of the unsaturated carboxylate ester-based monomer is at least 50% by mass, the weather resistance and surface hardness of the molded item are favorable.

The proportion of the other monomer within the monomer component (100% by mass) is preferably within a range from 0 to 50% by mass, and more preferably from 0 to 30% by mass. Provided the proportion of the other monomer is not more than 50% by mass, the weather resistance and surface hardness of the molded item are favorable.

Polymer (III-c)

The polymer (III-c) is preferably a mixture of a polymer obtained by polymerizing a monomer component (100% by mass) containing 3 to 50% by mass of an unsaturated nitrile-based monomer, 20 to 97% by mass of an aromatic vinyl-based monomer, and 0 to 50% by mass of one or more other monomers if required, and a polymer obtained by polymerizing a monomer component (100% by mass) containing 50 to 100% by mass of an unsaturated carboxylate ester-based monomer and 0 to 50% by mass of one or more other monomers if required.

Specific examples of the polymer (III) include poly(methyl methacrylate), acrylonitrile-styrene copolymers (AS resins), acrylonitrile-styrene-N-substituted maleimide ternary copolymers, styrene-maleic anhydride copolymers, styrene-maleic anhydride-N-substituted maleimide ternary copolymers, polystyrene, methyl methacrylate-styrene copolymers (MS resins), and acrylonitrile-styrene-methyl methacrylate copolymers.

Depending on the intended application, one type of polymer (III) may be used alone, or two or more types may be used in combination.

(Thermoplastic resin composition)

A thermoplastic resin composition of the present invention may include the graft copolymer (I') of the present invention, and the polymer (III) and/or another thermoplastic resin.
Here, the term "another thermoplastic resin" describes thermoplastic resins excluding the graft copolymer (I') and the polymer (III) of the present invention.
Amongst 100 parts by mass of the combination of the graft copolymer (I'), and the polymer (III) and/or other thermoplastic resin, the graft copolymer (I') typically represents 3 to 70 parts by mass, and the polymer (III) and/or other thermoplastic resin typically represents 30 to 97 parts by mass. Provided the amount of the graft copolymer (I') is at least 3 parts by mass, the impact resistance and matte properties of the molded item are favorable. Provided the amount of the graft copolymer (I') is not more than 70 parts by mass, the external appearance of the surface of the molded item is favorable. Further, the fluidity of the thermoplastic resin composition also improves, which facilitates molding.
Amongst 100 parts by mass of the combination of the graft copolymer (I'), and the polymer (III) and/or other thermoplastic resin, the graft copolymer (I') preferably represents 5 to 50 parts by mass, and the polymer (III) and/or other thermoplastic resin typically represents 50 to 95 parts by mass.
The amount of the enlarged rubber incorporated within the graft copolymer (I') is preferably within a range from 1 to 30 parts by mass, and more preferably 3 to 25 parts by mass, per 100 parts by mass of the polymer (III) and/or other thermoplastic resin.
Further, the thermoplastic resin composition of the present invention contains 10 to 70% by mass of the graft copolymer (I) and 30 to 90% by mass of the polymer (III) within the thermoplastic resin composition (100% by mass). If required, the composition may also contain 0 to 50% by mass of the graft copolymer (II).
Provided the amount of the graft copolymer (I) is at least 10% by mass, a molded item having excellent impact resistance and surface matte properties can be obtained.
Provided the amount of the polymer (III) is at least 30% by mass, the fluidity of the thermoplastic resin is favorable, which facilitates molding.
The combined amount of the rubber-like polymer contained within the graft copolymer (I) and the graft copolymer (II) is preferably within a range from 1 to 30 parts by mass, and more preferably from 5 to 25 parts by mass, per 100 parts by mass of the thermoplastic resin composition.
The thermoplastic resin composition of the present invention can be produced either by mixing the graft copolymer (I'), and the polymer (III) and/or another thermoplastic resin, or by mixing the graft copolymer (I), the polymer (III), and if required the graft copolymer (II) and any other components using a V-type blender or Henschel mixer or the like, and then subjecting the resulting mixture to melt mixing.
The melt mixing can be performed using an extruder or a kneader (such as a Banbury mixer, heated kneader or roller or the like).
If required, the thermoplastic resin composition of the present invention may also include a colorant (such as a pigment or dye), heat stabilizer, photostabilizer, reinforcing agent, filler, flame retardant, antifoaming agent, lubricant, plasticizer, antistatic agent, or processing assistant.

(Molded item)

The molded item of the present invention is a molded item (i) or molded item (ii) described below.

(i) A molded item obtained by molding the thermoplastic resin composition of the present invention.
(ii) A molded item having a coating layer formed from the thermoplastic resin composition of the present invention on the surface of a molded item body.

Molded item (i)

Examples of molding methods that may be used include injection molding methods, extrusion molding methods, blow molding methods, compression molding methods, calender molding methods, and inflation molding methods.
The molded item (i) is preferably obtained by extrusion molding, as the thermoplastic resin composition undergoes extrusion molding readily, and extrusion molding facilitates the generation of more uniform matte properties across the surface of the molded item.

Molded item (ii)

Examples of the material of the molded item body include resins and metals and the like.
Examples of the resins include the polymer (III), and other thermoplastic resins and thermosetting resins (such as phenolic resins and melamine resins). A molded item prepared by using a coating extrusion molding method to coat a layer of the thermoplastic resin composition of the present invention onto the molded item during extrusion molding of the molded item body is preferred, both in terms of the ease of molding, and in terms of facilitating the generation of more uniform matte properties across the surface of the molded item.

The other thermoplastic resin refers to thermoplastic resins excluding the thermoplastic resin of the graft copolymer (I) and the polymer (III).

Specific examples of the other thermoplastic resin include polycarbonates, polybutylene terephthalate (PBT resins), polyethylene terephthalate (PET resins), polyvinyl chloride, polyolefins (such as polyethylene and polypropylene), styrene-based elastomers (such as styrene-butadiene-styrene block copolymers (SBS), styrene-butadiene rubbers (SBR), hydrogenated SBS, and styrene-isoprene-styrene block copolymers (SIS)), olefin-based elastomers, polyester-based elastomers, polyacetal resins, modified PPE resins, ethylene-vinyl acetate copolymers, polyphenylene sulfide (PPS resins), polyethersulfone (PES resins), polyetheretherketone (PEEK resins), polyarylates, liquid crystal polyester resins, polyamide resins (such as Nylon), and rubber-modified thermoplastic resins (such as ABS resins and HIPS resins). A polyvinyl chloride is particularly preferred.

A single type of other thermoplastic resin may be used alone, or two or more types may be used in combination.

Examples of potential applications for the molded item of the present invention include automobile components (including any of the various external and internal components that are used in an unpainted state), construction materials (such as wall materials and window frame materials), food dishes and utensils, toys, household electrical appliances (such as vacuum cleaner housings, television housings and air conditioner housings), interior members, ship and boat members, and housings for electrical equipment (such as communication equipment housings, laptop computer housings, PDA housings, and liquid crystal projector housings).

EXAMPLES

The present invention is described below in further detail based on a series of examples, although the present invention is in no way limited by these examples. In the examples, the units "parts" refer to "parts by mass", whereas "%" refers to "% by mass".

(Average particle size)

The mass average particle sizes of the rubber-like polymers and enlarged rubbers were determined by a photon correlation method using a MICROTRAC (model: 9230UPA, manufactured by Nikkiso Co., Ltd.).

(Solid fraction)

The solid fraction of a latex was determined by accurately weighing 1 g of the latex, evaporating the volatile component by heating at 200˚C for 20 minutes, weighing the residue, and then calculating the solid fraction from the following formula.

$$\text{Solid fraction (\%)} = \text{mass of residue} / \text{mass of latex} \times 100$$

(Polymerization conversion rate)

The polymerization conversion rate was determined by measuring the solid fraction in the manner described above, and then calculating the polymerization conversion rate from the following formula.

$$\text{Polymerization conversion rate (\%)} = \{\text{solid fraction} \div 100 \times \text{total mass of added components} - \text{mass of added components other than monomer and water}\} / \text{total mass of monomer} \times 100$$

In this formula, the total mass of added components describes the total mass of materials added to the reaction vessel

EP 2 182 010 A1

including the monomer and water and the like.

(Graft ratio)

The graft ratio of the graft copolymer (I) was calculated using the following method. Namely, 80 mL of acetone was added to 2.5 g of the graft copolymer (I) and the resulting mixture was refluxed for 3 hours at 65°C, thereby extracting the acetone-soluble component. The residual acetone-insoluble material was separated by centrifugal separation, dried and then weighed, and the mass proportion of acetone-insoluble material within the graft copolymer (I) was calculated. Using this value for the mass proportion of acetone-insoluble material within the graft copolymer (I), the graft ratio was calculated using the formula below.

$$\text{Graft ratio (\%)} = \frac{\text{mass proportion of acetone insoluble material - mass proportion of rubber like polymer}}{\text{mass proportion of rubber like polymer}} \times 100$$

(Mass average molecular weight)

Measurement of the mass average molecular weight of the acetone-soluble fraction contained within the graft copolymer (I) was performed using the acetone-soluble fraction extracted during the measurement of the graft ratio, and was measured by gel permeation chromatography (GPC) under the following conditions. The dried acetone-soluble fraction was dissolved in tetrahydrofuran to generate a solution of 0.2 mg/mL, measurement was then conducted using two GPC columns HZM manufactured by Tosoh Corporation, under conditions including a temperature of 40°C and a tetrahydrofuran elution rate of 0.5 mL/minute, and the mass average molecular weight was determined by comparison with the molecular weight of polystyrene standards.

(Reduced viscosity)

The reduced viscosity was measured for a 0.2 g/dL N,N-dimethylformamide solution of the polymer (III), using a Ubbelohde viscometer at 25°C. The reduced viscosity of the graft copolymer was measured using the acetone-soluble fraction extracted during the measurement of the graft ratio.

(Melt volume rate)

The melt volume rate of the thermoplastic resin composition was measured in accordance with the method prescribed in ISO 1133, under conditions including a barrel temperature of 220°C and a load of 98 N. The melt volume rate acts as an indicator of the fluidity of the thermoplastic resin composition.

(Charpy impact strength)

The Charpy impact strength of a molded item was measured using the method prescribed in ISO 179, and was measured using a notched test specimen that had been left to stand for at least 12 hours in an atmosphere at 23°C.

(Gloss)

The surface gloss of a molded item was determined on the basis of the reflectance at an incident angle of 60° and a reflection angle of 60°, measured using a digital variable gloss meter UGV-5D, manufactured by Suga Test Instruments Co., Ltd.

(Surface appearance)

The surface appearance of a molded item was evaluated visually on the basis of the surface state (roughness, uniformity, matte properties, occurrence of fish eyes or dye lines, and surface texture fineness). The surface appearance acts as an indicator of the dispersibility of the graft copolymer.
○: a favorable sheet with no problems
Δ: a result between ○ and ×
×: numerous problems, not able to withstand practical use

[Synthesis example 1] Production of rubber-like polymer latex (A-1)

A reaction vessel fitted with a reagent injection container, a cooling tube, a jacket heater, and a stirrer was charged, under constant stirring, with:

 360 parts of deionized water (hereafter referred to simply as "water"),
 1 part of a dipotassium alkenylsuccinate (LATEMUL ASK, manufactured by Kao Corporation),
 100 parts of n-butyl acrylate,
 0.2 parts of allyl methacrylate,
 0.1 parts of 1,3-butylene glycol dimethacrylate, and
 0.2 parts of t-butyl hydroperoxide,
 and following replacement of the air inside of the reaction vessel with nitrogen, the temperature of the reaction vessel contents was raised.

At 55°C, an aqueous solution formed from:

 0.5 parts of sodium formaldehyde sulfoxylate,
 0.0003 parts of ferrous sulfate heptahydrate,
 0.0009 parts of disodium ethylenediamine tetraacetate, and
 10 parts of water was added, and a polymerization reaction was initiated.

Following confirmation of heat generation from the polymerization, the jacket temperature was set to 75°C, and the polymerization was continued until heat generated by the polymerization reaction could no longer be detected. Three hours after initiation of the polymerization, the reaction mixture was cooled, yielding a rubber-like polymer latex (A-1) (a (meth)acrylate ester-based rubber latex) having a solid fraction of 21% and a mass average particle size for the rubber-like polymer of 0.11 μm.

[Synthesis example 2] Production of rubber-like polymer latex (A-2)

With the exception of replacing the 100 parts of n-butyl acrylate with 60 parts of n-butyl acrylate and 40 parts of 2-ethylhexyl acrylate, production was conducted in the same manner as synthesis example 1, yielding a rubber-like polymer latex (A-2) (an acrylate ester-based rubber latex) having a solid fraction of 21% and a mass average particle size for the rubber-like polymer of 120 nm.

[Synthesis example 3] Production of rubber-like polymer latex (A-3)

With the exception of altering the amount of the allyl methacrylate from 0.2 parts to 0.1 parts, production was conducted in the same manner as synthesis example 1, yielding a rubber-like polymer latex (A-3) (an acrylate ester-based rubber latex) having a solid fraction of 21% and a mass average particle size for the rubber-like polymer of 110 nm.

[Synthesis example 4] Production of rubber-like polymer latex (A-4)

With the exception of altering the amount of the allyl methacrylate from 0.2 parts to 0 parts, production was conducted in the same manner as synthesis example 1, yielding a rubber-like polymer latex (A-4) (an acrylate ester-based rubber latex) having a solid fraction of 21% and a mass average particle size for the rubber-like polymer of 110 nm.

[Synthesis example 5] Production of rubber-like polymer latex (A-5)

With the exception of altering the amount of the allyl methacrylate from 0.2 parts to 0.6 parts, production was conducted in the same manner as synthesis example 1, yielding a rubber-like polymer latex (A-5) (an acrylate ester-based rubber latex) having a solid fraction of 21% and a mass average particle size for the rubber-like polymer of 110 nm.

[Synthesis example 6] Production of acid group-containing copolymer latex (C-1)

A reaction vessel fitted with a reagent injection container, a cooling tube, a jacket heater, and a stirrer was charged, under a stream of nitrogen, with:

 200 parts of water,

2 parts of potassium oleate,
4 parts of sodium dioctyl sulfosuccinate
0.003 parts of ferrous sulfate heptahydrate,
0.009 parts of disodium ethylenediamine tetraacetate, and
0.3 parts of sodium formaldehyde sulfoxylate,

and the temperature was then raised to 60˚C. When the temperature reached 60˚C, a mixture composed of:

82 parts of n-butyl acrylate,
18 parts of methacrylic acid, and
0.5 parts of cumene hydroperoxide was added dropwise to the vessel in a continuous manner over a period of 120 minutes. Following completion of the dropwise addition, the mixture was aged for a further two hours at 60˚C, yielding an acid group-containing copolymer latex (C-1) having a solid fraction of 33%, a polymerization conversion rate of 96%, and a mass average particle size for the acid group-containing copolymer of 0.15 $\mu$m.

[Synthesis example 7] Production of acid group-containing copolymer latex (C-2)

With the exception of replacing the 82 parts of n-butyl acrylate and 18 parts of methacrylic acid with 88 parts of n-butyl acrylate and 12 parts of methacrylic acid respectively, production was conducted in the same manner as synthesis example 6, yielding an acid group-containing copolymer latex (C-2) having a solid fraction of 33%, a polymerization conversion rate of 95%, and a mass average particle size for the acid group-containing copolymer of 0.11 $\mu$m.

[Synthesis example 8] Production of acid group-containing copolymer latex (C-3)

With the exception of replacing the 2 parts of potassium oleate, 4 parts of sodium dioctyl sulfosuccinate, 82 parts of n-butyl acrylate and 18 parts of methacrylic acid with 3 parts of potassium oleate, 5 parts of sodium dioctyl sulfosuccinate, 75 parts of n-butyl acrylate and 25 parts of methacrylic acid respectively, production was conducted in the same manner as synthesis example 6, yielding an acid group-containing copolymer latex (C-3) having a solid fraction of 33%, a polymerization conversion rate of 93%, and a mass average particle size for the acid group-containing copolymer of 0.12 $\mu$m.

[Synthesis example 9] Production of acid group-containing copolymer latex (C-4)

With the exception of replacing the 82 parts of n-butyl acrylate and 18 parts of methacrylic acid with 93 parts of n-butyl acrylate and 7 parts of acrylic acid respectively, production was conducted in the same manner as synthesis example 6, yielding an acid group-containing copolymer latex (C-4) having a solid fraction of 33%, a polymerization conversion rate of 95%, and a mass average particle size for the acid group-containing copolymer of 0.11 $\mu$m.

[Synthesis example 10] Production of acid group-containing copolymer latex (C-5)

With the exception of replacing the 82 parts of n-butyl acrylate and 18 parts of methacrylic acid with 70 parts of n-butyl acrylate, 20 parts of methyl acrylate and 10 parts of crotonic acid, production was conducted in the same manner as synthesis example 6, yielding an acid group-containing copolymer latex (C-5) having a solid fraction of 33%, a polymerization conversion rate of 96%, and a mass average particle size for the acid group-containing copolymer of 0.11 $\mu$m.

[Synthesis example 11] Production of acid group-containing copolymer latex (C-6)

With the exception of replacing the 82 parts of n-butyl acrylate with 79 parts of n-butyl acrylate and 3 parts of styrene, production was conducted in the same manner as synthesis example 6, yielding an acid group-containing copolymer latex (C-6) having a solid fraction of 33%, a polymerization conversion rate of 96%, and a mass average particle size for the acid group-containing copolymer of 0.14 $\mu$m.

[Synthesis example 12] Production of acid group-containing copolymer latex (C-7)

With the exception of replacing the 82 parts of n-butyl acrylate and 18 parts of methacrylic acid with 97 parts of n-butyl acrylate and 3 parts of methacrylic acid respectively, production was conducted in the same manner as synthesis example 6, yielding an acid group-containing copolymer latex (C-7) having a solid fraction of 33%, a polymerization conversion rate of 96%, and a mass average particle size for the acid group-containing copolymer of 100 nm.

[Synthesis example 13] Production of acid group-containing copolymer latex (C-8)

With the exception of replacing the 82 parts of n-butyl acrylate and 18 parts of methacrylic acid with 55 parts of n-butyl acrylate and 45 parts of methacrylic acid respectively, the same operations as synthesis example 6 were performed, but the contents of the reaction vessel solidified during the dropwise addition operation, meaning an acid group-containing copolymer latex (C-8) could not be obtained.
[Table 1]

| Acid group-containing copolymer latex (C) | Amount of monomer (%) | | | | | | Mass average particle size (μm) |
|---|---|---|---|---|---|---|---|
| | n-butyl acrylate | methyl acrylate | methacrylic acid | acrylic acid | crotonic acid | styrene | |
| (C-1) | 82 | - | 18 | - | - | - | 0.15 |
| (C-2) | 88 | - | 12 | - | - | - | 0.11 |
| (C-3) | 75 | - | 25 | - | - | - | 0.12 |
| (C-4) | 93 | - | - | 7 | - | - | 0.11 |
| (C-5) | 70 | 20 | - | - | 10 | - | 0.11 |
| (C-6) | 79 | - | 18 | - | - | 3 | 0.14 |
| (C-7) | 97 | - | 3 | - | - | - | 0.10 |
| (C-8) | 55 | - | 45 | - | - | - | solidified |

[Example 1] Production of enlarged rubber latex (a-1)

A reaction vessel fitted with a reagent injection container, a jacket heater, and a stirrer was charged with 476 parts (solid fraction: 100 parts) of the rubber-like polymer latex (A-1), and with the latex undergoing constant stirring, the internal temperature was raised to 30°C using the jacket heater. 1 part of sodium pyrophosphate was added to the flask in the form of a 5% aqueous solution, and following thorough stirring, 1.2 parts (solid fraction: 0.4 parts) of the acid group-containing copolymer latex (C-1) was added. Stirring was then continued for 30 minutes with the internal temperature maintained at 30°C, yielding an enlarged rubber latex (a-1) having a mass average particle size for the enlarged rubber of 0.7 μm.

[Examples 2 to 15, 18 to 20] Production of enlarged rubber latexes (a-2) to (a-15), and (a-18) to (a-20)

With the exceptions of using the rubber-like polymer latexes (A), the condensed acid salts (B) or other electrolytes, and the acid group-containing copolymer latexes (C) listed in Table 2, and altering the rubber enlargement temperature as recorded in Table 2, enlarged rubber latexes (a-2) to (a-15) and (a-18) to (a-20) were produced in the same manner as example 1.
[Table 2]

| | | Enlarged rubber latex (a) | Enlargement conditions | | | | | | | Mass average particle size (μm) |
|---|---|---|---|---|---|---|---|---|---|---|
| | | | Rubber-like polymer latex (A) | | Condensed acid salt (B) / other electrolyte | | Acid group-containing copolymer latex (C) | | Temperature (°C) | |
| | | | Type | Solid fraction (parts) | Type | Amount (parts) | Type | Solid fraction (parts) | | |
| Example | 1 | (a-1) | (A-1) | 100 | sodium pyrophosphate | 1 | (C-1) | 0.4 | 30 | 0.7 |
| | 2 | (a-2) | (A-2) | 100 | sodium pyrophosphate | 1 | (C-1) | 0.4 | 30 | 0.7 |
| | 3 | (a-3) | (A-1) | 100 | sodium pyrophosphate | 3 | (C-1) | 1 | 30 | 1.2 |
| | 4 | (a-4) | (A-1) | 100 | sodium pyrophosphate | 6 | (C-1) | 1 | 30 | 1.4 |
| | 5 | (a-5) | (A-1) | 100 | sodium pyrophosphate | 1 | (C-1) | 3 | 30 | 0.9 |
| | 6 | (a-6) | (A-1) | 100 | sodium pyrophosphate | 0.6 | (C-1) | 6 | 30 | 0.7 |
| | 7 | (a-7) | (A-1) | 100 | sodium pyrophosphate | 1 | (C-1) | 0.4 | 75 | 0.8 |
| | 8 | (a-8) | (A-1) | 100 | sodium pyrophosphate | 1 | (C-2) | 3 | 30 | 0.7 |
| | 9 | (a-9) | (A-1) | 100 | sodium pyrophosphate | 3 | (C-3) | 1 | 30 | 2.6 |
| | 10 | (a-10) | (A-1) | 100 | sodium pyrophosphate | 3 | (C-3) | 0.2 | 30 | 0.6 |
| | 11 | (a-11) | (A-1) | 100 | sodium pyrophosphate | 0.2 | (C-3) | 0.7 | 30 | 0.6 |
| | 12 | (a-12) | (A-1) | 100 | sodium pyrophosphate | 8 | (C-4) | 8 | 30 | 0.6 |
| | 13 | (a-13) | (A-1) | 100 | sodium pyrophosphate | 1 | (C-5) | 3 | 30 | 0.8 |
| | 14 | (a-14) | (A-1) | 100 | sodium pyrophosphate | 1 | (C-6) | 0.4 | 30 | 0.7 |
| | 15 | (a-15) | (A-1) | 100 | potassium pyrophosphate | 3 | (C-1) | 1 | 30 | 1.0 |
| | 18 | (a-18) | (A-3) | 100 | sodium pyrophosphate | 1 | (C-1) | 1 | 75 | 1.1 |
| | 19 | (a-19) | (A-4) | 100 | sodium pyrophosphate | 1 | (C-1) | 1 | 75 | 1.1 |
| | 20 | (a-20) | (A-5) | 100 | sodium pyrophosphate | 1 | (C-1) | 1 | 75 | 1.1 |

[Comparative examples 1 to 7 and 7']

Using the rubber-like polymer latexes (A), the condensed acid salts (B) or other electrolytes, and the acid group-containing copolymer latexes (C) listed in Table 3, enlarged rubber latexes were produced in the same manner as example 1 at the temperature listed in Table 3. In comparative example 2, large amounts of agglomerates were generated, and an enlarged rubber latex could not be obtained.

[Table 3]

| | | | Enlargement conditions | | | | | | Mass average particle size (μm) |
|---|---|---|---|---|---|---|---|---|---|
| | | Rubber-like polymer latex (A) | | Condensed acid salt (B) / other electrolyte | | Acid group-containing copolymer latex (C) | | Temperature (°C) | |
| | | Type | Solid fraction (parts) | Type | Amount (parts) | Type | Solid fraction (parts) | | |
| Comparative example | 1 | (A-1) | 100 | sodium pyrophosphate | 0.05 | (C-1) | 0.4 | 30 | 0.28 |
| | 2 | (A-1) | 100 | sodium pyrophosphate | 12 | (C-1) | 0.4 | 30 | many agglomerates |
| | 3 | (A-1) | 100 | sodium pyrophosphate | 1 | (C-1) | 0.05 | 30 | 0.17 |
| | 4 | (A-1) | 100 | sodium pyrophosphate | 1 | (C-1) | 12 | 30 | 0.28 |
| | 5 | (A-1) | 100 | sodium phosphate | 3 | (C-1) | 1 | 30 | 0.56 |
| | 6 | (A-1) | 100 | sodium sulfate | 3 | (C-1) | 1 | 30 | 0.44 |
| | 7 | (A-1) | 100 | sodium pyrophosphate | 3 | (C-7) | 1 | 30 | 0.18 |
| | 7' | (A-1) | 100 | sodium pyrophosphate | 15 | (C-1) | 1 | 30 | 10.7 |

From the results of the above examples and comparative examples, the following facts were evident.

(1) Examples 1 to 15 and 18 to 20 revealed that large-particle size enlarged rubbers having a mass average particle size of 600 nm or greater were able to be produced in a short period of time, a finding which has a high degree of industrial applicability.

(2) In particular, examples 3, 4, 9, 15, and 18 to 20 enabled large-particle size enlarged rubbers having a mass average particle size exceeding 1,000 nm, which have conventionally proven very difficult to produce, to be produced in a short period of time, a finding which has an extremely high degree of industrial applicability.

(3) Comparative examples 1 to 4 revealed that when the amounts of the condensed acid salt and the acid group-containing copolymer were outside the ranges specified by the present invention, obtaining a large-particle size enlarged rubber having a mass average particle size of 600 nm or greater was difficult.

(4) In comparative examples 5 and 6, the mass average particle size of the enlarged rubber was 560 nm and 440 nm respectively, which is smaller than the 600 nm required for exhibiting improved design properties, and therefore the industrial applicability was poor. This indicates that with a conventional method of combining an acid group-containing copolymer and an electrolyte, obtaining a large-particle size enlarged rubber having a mass average particle size of 600 nm or greater is problematic.

(5) Comparative example 7 revealed that when the acid group-containing monomer used in the production of the acid group-containing copolymer was less than 5% by mass, obtaining a large-particle size enlarged rubber having a mass average particle size of 600 nm or greater was difficult. Further, synthesis example 9 revealed that when the acid group-containing monomer used in the production of the acid group-containing copolymer exceeded 40% by mass, producing the acid group-containing copolymer was problematic.

[Example 21] Production of graft copolymer (I'-1)

A reaction vessel fitted with a reagent injection container, a cooling tube, a jacket heater, and a stirrer was charged with:

295 parts (solid fraction: 60 parts) of the enlarged rubber latex (a-1),
250 parts of water (including the water within the enlarged rubber latex),
40 parts of methyl methacrylate, and
0.3 parts of azobisisobutyronitrile, and following thorough flushing of the inside of the reaction vessel with nitrogen, the internal temperature was raised to 75˚C under constant stirring to initiate the polymerization. Stirring was continued for 3 hours with the internal temperature maintained at 75˚C, and the reaction mixture was then cooled, yielding a graft copolymer (I'-1) latex.

Subsequently, 150 parts of a 1.2% aqueous solution of sulfuric acid was heated to 75˚C, and 100 parts of the graft copolymer (1'-1) latex was gradually added dropwise to the aqueous solution under constant stirring, thereby solidifying the graft copolymer. The temperature was then raised to 90˚C and held at that temperature for 5 minutes. Subsequently, the solidified product was dewatered, washed, and dried, yielding a powder of the graft copolymer (I'-1).

[Examples 22 to 40, Comparative examples 8, 9 and 12] Production of graft copolymers (I'-2) to (I'-22) and (I'-25)

With the exception of altering the enlarged rubber latex (a) and the monomer component to the materials and amounts listed in Table 3, production was performed in the same manner as example 21, yielding powders of graft copolymers (I'-2) to (I'-22) and (I'-25).

[Comparative example 10] Production of graft copolymer (I'-23)

With the exceptions of using 95 parts of the enlarged rubber latex (a-3), and altering the amount of the methyl methacrylate to 5 parts, the same operations as example 21 were performed, but at the solidification and dewatering stage, the graft copolymer (I'-23) formed lumps, and a powder of the graft copolymer (I'-23) could not be obtained.

[Comparative example 11] Production of graft copolymer (I'-24)

With the exception of replacing the enlarged rubber latex (a-1) with the enlarged rubber latex produced in comparative example 7', the same operations as example 21 were performed, but the graft copolymer (I'-24) solidified during the dropwise addition to the reaction vessel, and a powder of the graft copolymer (I'-24) could not be obtained.
[Table 4]

| | | Graft copolymer (I') | Enlarged rubber latex (a) | | | Monomer component (parts) | | | |
|---|---|---|---|---|---|---|---|---|---|
| | | | Type | Mass average particle size (μm) | Number of parts (solid fraction) | Methyl methacrylate | Methyl acrylate | Acrylo-nitrile | styrene |
| Example | 21 | (I'-1) | (a-1) | 0.7 | 60 | 40 | - | - | - |
| | 22 | (I'-2) | (a-2) | 0.7 | 60 | 35 | 5 | - | - |
| | 23 | (I'-3) | (a-3) | 1.2 | 60 | 40 | - | - | - |
| | 24 | (I'-4) | (a-3) | 1.2 | 30 | 70 | - | - | - |
| | 25 | (I'-5) | (a-3) | 1.2 | 15 | 85 | - | - | - |
| | 26 | (I'-6) | (a-3) | 1.2 | 80 | 20 | - | - | - |
| | 27 | (I'-7) | (a-3) | 1.2 | 60 | 30 | - | 3 | 7 |
| | 28 | (I'-8) | (a-3) | 1.2 | 60 | 24 | - | 4 | 12 |
| | 29 | (I'-9) | (a-4) | 1.4 | 60 | 40 | - | - | - |
| | 30 | (I'-10) | (a-5) | 0.9 | 60 | 40 | - | - | - |
| | 31 | (I'-11) | (a-6) | 0.7 | 60 | 40 | - | - | - |
| | 32 | (I'-12) | (a-7) | 0.8 | 60 | 40 | - | - | - |
| | 33 | (I'-13) | (a-8) | 0.7 | 60 | 40 | - | - | - |
| | 34 | (I'-14) | (a-9) | 2.6 | 60 | 40 | - | - | - |
| | 35 | (I'-15) | (a-10) | 0.6 | 60 | 40 | - | - | - |
| | 36 | (I'-16) | (a-11) | 0.6 | 60 | 40 | - | - | - |
| | 37 | (I'-17) | (a-12) | 0.6 | 60 | 40 | - | - | - |
| | 38 | (I'-18) | (a-13) | 0.8 | 60 | 40 | - | - | - |
| | 39 | (I'-19) | (a-14) | 0.7 | 60 | 40 | - | - | - |
| | 40 | (I'-20) | (a-15) | 1.0 | 60 | 40 | - | - | - |
| Comparative example | 8 | (I'-21) | (a-3) | 1.2 | 60 | - | - | 10 | 30 |
| | 9 | (I'-22) | (a-3) | 1.2 | 5 | 95 | - | - | - |
| | 10 | (I'-23) | (a-3) | 1.2 | 95 | 5 | - | - | - |
| | 11 | (I'-24) | Enlarged rubber latex produced in comparative example 7' | 10.7 | 60 | 40 | - | - | - |
| | 12 | (I'-25) | Enlarged rubber latex produced in comparative example 6 | 0.4 | 60 | 40 | - | - | - |

[Synthesis example 14] Production of hydroxyl group-containing acrylic polymer (Z)

A reaction vessel fitted with a reagent injection container, a cooling tube, a jacket heater, and a stirrer was charged with:

> 250 parts of water,
> 20 parts of methyl acrylate,
> 60 parts of methyl methacrylate,
> 20 parts of 2-hydroxyethyl methacrylate,
> 0.5 parts of t-dodecylmercaptan,
> 1 part of lauroyl peroxide,
> 5 parts of calcium triphosphate, and

0.02 parts of a phosphate ester-based surfactant (PHOSPHANOL GB-520, manufactured by Toho Chemical Industry Co., Ltd.), and following thorough flushing of the inside of the reaction vessel with nitrogen, the internal temperature was raised to 75˚C under constant stirring to initiate the polymerization. Three hours after confirmation of heat generation from the polymerization, the internal temperature was raised to 90˚C, that temperature was maintained for a further 45 minutes, and the polymerization was then halted. The resulting slurry was then dewatered and dried, yielding bead-like particles of a hydroxyl group-containing acrylic polymer (Z).

[Synthesis example 15] Production of acrylonitrile-styrene copolymer (AS)

Using a conventional suspension polymerization method, an acrylonitrile-styrene copolymer (AS) was produced from 23% by mass of acrylonitrile and 77% by mass of styrene.

[Example 41]

95 parts of a vinyl chloride resin (number average polymerization degree Pn=800), 5 parts of the graft copolymer (I-1) as a delustering agent, 2 parts of a stabilizer (dibutyltin maleate), 7 parts of an impact resistance assistant (METABLEN C201A, manufactured by Mitsubishi Rayon Co., Ltd.), 2 parts of a processing assistant (METABLEN P551, manufactured by Mitsubishi Rayon Co., Ltd.), and 1 part of a lubricant (butyl stearate) were mixed together, and then using a 25 mmø uniaxial extruder manufactured by TPIC Co., Ltd., a thermoplastic resin composition was extruded in a sheet-like form from a T-die of width 60 mm, under conditions including a barrel temperature of 190˚C and a cooling roller temperature of 85˚C, and by appropriate adjustment of the winding speed, a sheet-like molded item of width 50 to 60 mm in which the thickness had been regulated to a value of 400 to 500 μm was molded. The gloss of the molded item was measured and the surface appearance was evaluated. Subsequently, the sheet-like molded item was subjected to compression molding at 165˚C and a pressure of 70 tons to mold a sheet of thickness 2.5 mm, and the Charpy impact strength of this sheet was measured. The results are detailed in Table 4.

[Examples 42 to 63, Comparative examples 13 to 19]

With the exception of altering the type and amounts of the vinyl chloride resin and delustering agent as detailed in Table 4, molded items were obtained in the same manner as example 41. The results are listed in Table 4.
In the case of comparative example 14, the screw stopped due to excessive loading during the molding within the uniaxial extruder, making molding impossible.

[Example 64]

Using a mixture of 100 parts of a vinyl chloride resin (number average polymerization degree Pn=800), 2 parts of a stabilizer (dibutyltin maleate), 7 parts of an impact resistance assistant (METABLEN C201A, manufactured by Mitsubishi Rayon Co., Ltd.), 2 parts of a processing assistant (METABLEN P551, manufactured by Mitsubishi Rayon Co., Ltd.) and 1 part of a lubricant (butyl stearate) as a substrate material, and using the thermoplastic resin composition used in example 45 as a coating material, the substrate material was extruded from a 40 mmø uniaxial extruder manufactured by Nakatani Machinery Co., Ltd. at a barrel temperature of 190˚C, while the coating material was extruded from a 25 mmø uniaxial extruder manufactured by Ikegai, Ltd. at a barrel temperature of 190˚C, and the thermoplastic resin compositions were extruded as a prismatic cylinder from a coating die having a width of 40 mm and a thickness of 10 mm and then subjected to sizing, yielding a prismatic cylinder-shaped profile extrusion molded item coated with the thermoplastic resin composition used in example 45. The surface gloss was 7%, and the molded item had a favorable surface appearance with no foreign matter defects or the like.
[Table 5]

| | | Thermoplastic resin composition | | | | Molded item | | |
|---|---|---|---|---|---|---|---|---|
| | | Thermoplastic resin | | Delustering agent | | Charpy impact strength (J/cm) | Gloss (%) | Surface appearance |
| | | Type | Amount (parts) | Type | Amount (parts) | | | |
| Example | 41 | PVC | 80 | (I'-1) | 20 | 92 | 12 | o |
| | 42 | PVC | 80 | (I'-2) | 20 | 97 | 13 | o |
| | 43 | PVC | 95 | (I'-3) | 5 | 16 | 13 | o |
| | 44 | PVC | 90 | (I'-3) | 10 | 45 | 8 | o |
| | 45 | PVC | 80 | (I'-3) | 20 | 91 | 7 | o |
| | 46 | PVC | 60 | (I'-4) | 40 | 91 | 27 | o |
| | 47 | PVC | 40 | (I'-5) | 60 | 73 | 32 | o |
| | 48 | PVC | 95 | (I'-6) | 5 | 37 | 36 | o |
| | 49 | PVC | 80 | (I'-7) | 20 | 92 | 7 | o |
| | 50 | PVC | 80 | (I'-8) | 20 | 93 | 9 | Δ |
| | 51 | PVC | 80 | (I'-9) | 20 | 90 | 7 | o |
| | 52 | PVC | 80 | (I'-10) | 20 | 95 | 10 | o |
| | 53 | PVC | 80 | (I'-11) | 20 | 92 | 12 | o |
| | 54 | PVC | 80 | (I'-12) | 20 | 91 | 10 | o |
| | 55 | PVC | 80 | (I'-13) | 20 | 94 | 12 | o |
| | 56 | PVC | 90 | (I'-14) | 10 | 54 | 15 | o |
| | 57 | PVC | 80 | (I'-15) | 20 | 89 | 36 | o |
| | 58 | PVC | 80 | (I'-16) | 20 | 81 | 32 | o |
| | 59 | PVC | 80 | (I'-17) | 20 | 83 | 34 | o |
| | 60 | PVC | 80 | (I'-18) | 20 | 92 | 11 | o |
| | 61 | PVC | 80 | (I'-19) | 20 | 88 | 13 | o |
| | 62 | PVC | 80 | (I'-20) | 20 | 97 | 8 | o |
| | 63 | AS | 60 | (I'-3) | 40 | 31 | 16 | Δ |
| Comparative example | 13 | PVC | 99 | (I'-3) | 1 | 7 | 73 | o |
| | 14 | PVC | 20 | (I'-3) | 80 | Molding impossible | | |
| | 15 | PVC | 80 | (I'-21) | 20 | 94 | 35 | × |
| | 16 | PVC | 80 | (I'-22) | 20 | 9 | 61 | o |
| | 17 | PVC | 80 | (I'-25) | 20 | 87 | 58 | o |
| | 18 | PVC | 80 | (X) | 20 | 11 | 11 | o |
| | 19 | PVC | 80 | (Z) | 20 | 6 | 10 | Δ |

PVC: vinyl chloride resin

(X): cross-linked vinyl chloride resin

From the results of the above examples and comparative examples, the following facts were evident.

(1) The molded items of examples 41 to 63 that used the graft copolymers (I'-1) to (I'-20) of examples 21 to 40 as delustering agents exhibited favorable impact resistance, matte properties and surface appearance.

(2) The profile extrusion coated molded item of example 64 that used the graft copolymer (I'-3) of example 23 as a delustering agent exhibited favorable matte properties and surface appearance.

(3) The molded item of comparative example 13, in which the amount of the graft copolymer was less than the range specified in the present invention, exhibited inferior impact resistance and matte properties. Comparative example 14, in which the amount of the graft copolymer was larger than the range specified in the present invention, suffered from a marked deterioration in the fluidity of the thermoplastic resin composition, and exhibited poor moldability.

(4) In the molded item of comparative example 15 that used the graft copolymer (I'-21) of comparative example 8 as a delustering agent, numerous external appearance foreign matter defects were observed on the surface of the item, meaning the surface appearance was poor.

(5) In the molded item of comparative example 16 that used the graft copolymer (I'-22) of comparative example 9 as a delustering agent, the amount of the enlarged rubber within the graft copolymer was outside the range specified in the present invention, and the impact resistance and the matte properties were inferior.

(6) In the molded item of comparative example 17 that used the graft copolymer (I'-25) of comparative example 12 as a delustering agent, the mass average particle size of the rubber-like polymer was outside the range specified in the present invention, and the matte properties were inferior.

(7) In the molded item of comparative example 18 that used a cross-linked vinyl chloride resin as a delustering agent, the matte properties and surface appearance were favorable, but the impact resistance was poor.

(8) In the molded item of comparative example 19 that used a hydroxyl group-containing acrylic polymer as a delustering agent, the matte properties were favorable, but the impact resistance and the surface appearance were inferior.

[Example 65] Production of graft copolymer (I-1)

A reaction vessel fitted with a reagent injection container, a cooling tube, a jacket heater, and a stirrer was charged with:

250 parts of water (including the water within the enlarged rubber latex),
295 parts (solid fraction: 60 parts) of the enlarged rubber latex (a-1),
0.4 parts of a dipotassium alkenylsuccinate (LATEMUL ASK, manufactured by Kao Corporation),
10 parts of acrylonitrile,
30 parts of styrene, and
0.3 parts of azobisisobutyronitrile, and following thorough flushing of the inside of the reaction vessel with nitrogen, the internal temperature was raised to 75°C under constant stirring to initiate the polymerization. Stirring was continued for 3 hours with the internal temperature maintained at 75°C, and the reaction mixture was then cooled, yielding a graft copolymer (I-1) latex.

Subsequently, 150 parts of a 1.2% aqueous solution of sulfuric acid was heated to 75°C, and 100 parts of the graft copolymer (I-1) latex was gradually added dropwise to the aqueous solution under constant stirring, thereby solidifying the graft copolymer. The temperature was then raised to 90°C and held at that temperature for 5 minutes. Subsequently, the solidified product was dewatered, washed, and dried, yielding a powder of the graft copolymer (I-1).

[Examples 66 to 84, Comparative examples 20, 21 and 24] Production of graft copolymers (I-2) to (I-22) and (I-25)

With the exception of altering the enlarged rubber latex (a) and the monomer component to the materials and amounts listed in Table 6, production was performed in the same manner as example 65, yielding powders of graft copolymers (I-2) to (I-22) and (I-25).

[Comparative example 22] Production of graft copolymer (I-23)

With the exceptions of using 95 parts of the enlarged rubber latex (a-3), and altering the amount of the acrylonitrile to 1.3 parts and the amount of the styrene to 3.7 parts, the same operations as example 65 were performed, but at the solidification and dewatering stage, the graft copolymer (I-23) formed lumps, and a powder of the graft copolymer (I-23) could not be obtained.

[Comparative example 23] Production of graft copolymer (I-24)

With the exception of replacing the enlarged rubber latex (a-1) with the enlarged rubber latex produced in comparative example 7', the same operations as example 65 were performed, but the graft copolymer (I-24) solidified inside the reaction vessel during the polymerization reaction, and a powder of the graft copolymer (I-24) could not be obtained.
# EP 2 182 010 A1

[Table 6]

| | | Graft copolymer (I) | Enlarged rubber latex (a) | | | Monomer component (parts) | | | |
|---|---|---|---|---|---|---|---|---|---|
| | | | Type | Mass average particle size (μm) | Number of parts (solid fraction) | acrylo-nitrile | styrene | α-methyl styrene | methyl methacrylate |
| Example | 65 | (I-1) | (a-1) | 0.7 | 60 | 10 | 30 | - | - |
| | 66 | (I-2) | (a-2) | 0.7 | 60 | 10 | 20 | 10 | - |
| | 67 | (I-3) | (a-3) | 1.2 | 60 | 10 | 30 | - | - |
| | 68 | (I-4) | (a-3) | 1.2 | 30 | 18 | 52 | - | - |
| | 69 | (I-5) | (a-3) | 1.2 | 15 | 22 | 53 | - | - |
| | 70 | (I-6) | (a-3) | 1.2 | 80 | 5 | 15 | - | - |
| | 71 | (I-7) | (a-3) | 1.2 | 60 | 12 | 12 | - | 16 |
| | 72 | (I-8) | (a-3) | 1.2 | 60 | 8 | 22 | - | 10 |
| | 73 | (I-9) | (a-4) | 1.4 | 60 | 9 | 31 | - | - |
| | 74 | (I-10) | (a-5) | 0.9 | 60 | 16 | 24 | - | - |
| | 75 | (I-11) | (a-6) | 0.7 | 60 | 10 | 30 | - | - |
| | 76 | (I-12) | (a-7) | 0.8 | 60 | 10 | 30 | - | - |
| | 77 | (I-13) | (a-8) | 0.7 | 60 | 2 | 38 | - | - |
| | 78 | (I-14) | (a-9) | 2.6 | 60 | 12 | 28 | - | - |
| | 79 | (I-15) | (a-10) | 0.6 | 60 | 10 | 30 | - | - |
| | 80 | (I-16) | (a-11) | 0.6 | 60 | 10 | 30 | - | - |
| | 81 | (I-17) | (a-12) | 0.6 | 60 | 10 | 30 | - | - |
| | 82 | (I-18) | (a-13) | 0.8 | 60 | 10 | 30 | - | - |
| | 83 | (I-19) | (a-14) | 0.7 | 60 | 10 | 30 | - | - |
| | 84 | (I-20) | (a-15) | 1.0 | 60 | 10 | 30 | - | - |
| Comparative example | 20 | (I-21) | (a-3) | 1.2 | 60 | - | - | - | 40 |
| | 21 | (I-22) | (a-3) | 1.2 | 5 | 24 | 71 | - | - |
| | 22 | (I-23) | (a-3) | 1.2 | 95 | 1.3 | 3.7 | - | - |
| | 23 | (I-24) | Enlarged rubber latex produced in comparative example 7' | 10.7 | 60 | 10 | 30 | - | - |
| | 24 | (I-25) | Enlarged rubber latex produced in comparative example 6 | 0.4 | 60 | 10 | 30 | - | - |

[Synthesis example 16] Production of graft copolymer (II-1)

A reaction vessel fitted with a reagent injection container, a cooling tube, a jacket heater, and a stirrer was charged with:

170 parts of water (including the water within the rubber latex),
100 parts (solid fraction: 50 parts) of a butadiene rubber latex (particle size: 0.35 μm),
0.5 parts of dipotassium alkenylsuccinate, and
0.15 parts of sodium formaldehyde sulfoxylate, and following thorough flushing of the inside of the reaction vessel with nitrogen, the internal temperature was raised to 75°C under constant stirring.

Subsequently, a mixture composed of:

5 parts of acrylonitrile,
15 parts of styrene, and
0.08 parts of t-butyl hydroperoxide was added dropwise to the reaction vessel over a period of one hour.

Following completion of the dropwise addition, the mixture was held at a temperature of 75°C for one hour, an aqueous solution formed from:

0.001 parts of ferrous sulfate heptahydrate,
0.003 parts of disodium ethylenediamine tetraacetate,
0.15 parts of sodium formaldehyde sulfoxylate, and
10 parts of water was added to the resist vessel, and subsequently, a mixture composed of:
8 parts of acrylonitrile
22 parts of styrene, and
0.2 parts of t-butyl hydroperoxide was dropwise to the reaction vessel over a period of 1.5 hours, during which time the internal temperature was prevented from exceeding 80°C. Following completion of the dropwise addition, the temperature was held at a temperature of 80°C for 30 minutes, and subsequently cooled, yielding a graft copolymer (II-1) latex.

The obtained graft copolymer (II-1) latex was solidified, dewatered, washed and dried in the same manner as example 65, yielding a powder of the graft copolymer (II-1).

[Synthesis example 17] Production of graft copolymer (11-2)

A reaction vessel fitted with a reagent injection container, a cooling tube, a jacket heater, and a stirrer was charged with:

170 parts of water (including the water within the rubber latex),
40 parts (solid fraction: 20 parts) of a butadiene rubber latex (particle size: 0.35 μm),
1 part of dipotassium alkenylsuccinate, and
0.15 parts of sodium formaldehyde sulfoxylate, and following thorough flushing of the inside of the reaction vessel with nitrogen, the internal temperature was raised to 75°C under constant stirring.

Subsequently, a mixture composed of:

8 parts of acrylonitrile,
20 parts of styrene,
4 parts of a-methylstyrene, and
0.1 parts of t-butyl hydroperoxide was added dropwise to the reaction vessel over a period of one hour.

Following completion of the dropwise addition, the mixture was held at a temperature of 75°C for one hour, an aqueous solution formed from:

0.001 parts of ferrous sulfate heptahydrate,
0.003 parts of disodium ethylenediamine tetraacetate,
0.15 parts of sodium formaldehyde sulfoxylate, and
10 parts of water was added to the reaction vessel, and subsequently, a mixture composed of:
12 parts of acrylonitrile,
30 parts of styrene,

6 parts of α-methylstyrene, and

0.3 parts of t-butyl hydroperoxide was added dropwise to the reaction vessel over a period of 1.5 hours, during which time the internal temperature was prevented from exceeding 80°C. Following completion of the dropwise addition, the temperature was held at a temperature of 80°C for 30 minutes, and subsequently cooled, yielding a graft copolymer (II-2) latex.

The obtained graft copolymer (II-2) latex was solidified, dewatered, washed and dried in the same manner as example 65, yielding a powder of the graft copolymer (II-2).

[Synthesis example 18] Production of graft copolymer (II-3)

A reaction vessel fitted with a reagent injection container, a jacket heater, and a stirrer was charged with 238 parts (solid fraction: 50 parts) of the rubber-like polymer latex (A-1), and the jacket heater was used to raise the internal temperature to 30°C under constant stirring. 1.5 parts (solid fraction: 0.5 parts) of the acid group-containing copolymer latex (C-2) was added, and the resulting mixture was stirred for 30 minutes with the temperature held at 30°C, yielding an enlarged rubber latex having a mass average particle size for the enlarged rubber of 0.28 μm.
Subsequently, to the reaction vessel were added:

170 parts of water (including the water within the rubber latex),
0.5 parts of dipotassium alkenylsuccinate, and
0.15 parts of sodium formaldehyde sulfoxylate, and following thorough flushing of the inside of the reaction vessel with nitrogen, the internal temperature was raised to 75°C under constant stirring. Subsequently, a mixture composed of:

4 parts of acrylonitrile,
14 parts of styrene,
2 parts of methyl methacrylate, and
0.08 parts of t-butyl hydroperoxide was added dropwise to the reaction vessel over a period of one hour.

Following completion of the dropwise addition, the temperature was held at 75°C for one hour, an aqueous solution formed from:

0.001 parts of ferrous sulfate heptahydrate,
0.003 parts of disodium ethylenediamine tetraacetate,
0.15 parts of sodium formaldehyde sulfoxylate, and
10 parts of water was added to the reaction vessel, and subsequently, a mixture composed of:

6 parts of acrylonitrile,
21 parts of styrene,
3 parts of methyl methacrylate, and
0.2 parts of t-butyl hydroperoxide was added dropwise to the reaction vessel over a period of 1.5 hours, during which time the internal temperature was prevented from exceeding 80°C. Following completion of the dropwise addition, the temperature was held at a temperature of 80°C for 30 minutes, and subsequently cooled, yielding a graft copolymer (II-3) latex.

The obtained graft copolymer (II-3) latex was solidified, dewatered, washed and dried in the same manner as example 65, yielding a powder of the graft copolymer (II-3).

[Synthesis example 19] Production of graft copolymer (II-4)

A reaction vessel fitted with a reagent injection container, a cooling tube, a jacket heater, and a stirrer was charged with:

170 parts of water (including the water within the rubber latex),
130 parts (solid fraction: 40 parts) of an ethylene-propylene-diene rubber latex (particle size: 0.48 μm),
0.001 parts of ferrous sulfate heptahydrate,
0.003 parts of disodium ethylenediamine tetraacetate,
0.2 parts of dipotassium alkenylsuccinate, and

0.15 parts of sodium formaldehyde sulfoxylate, and following thorough flushing of the inside of the reaction vessel with nitrogen, the internal temperature was raised to 75˚C under constant stirring.

Subsequently, a mixture composed of:

8 parts of acrylonitrile,
16 parts of styrene, and
0.1 parts of t-butyl hydroperoxide was added dropwise to the reaction vessel over a period of one hour.

Following completion of the dropwise addition, the mixture was held at a temperature of 75˚C for one hour, an aqueous solution formed from:

0.001 parts of ferrous sulfate heptahydrate,
0.003 parts of disodium ethylenediamine tetraacetate,
0.15 parts of sodium formaldehyde sulfoxylate, and
10 parts of water was added to the reaction vessel, and subsequently, a mixture composed of:

12 parts of acrylonitrile,
24 parts of styrene,
0.3 parts of t-butyl hydroperoxide was added dropwise to the reaction vessel over a period of 1.5 hours, during which time the internal temperature was prevented from exceeding 80˚C. Following completion of the dropwise addition, the temperature was held at a temperature of 80˚C for 30 minutes, and subsequently cooled, yielding a graft copolymer (II-4) latex.

The obtained graft copolymer (II-4) latex was solidified, dewatered, washed and dried in the same manner as example 65, yielding a powder of the graft copolymer (II-4).
[Table 7]

| Graft copolymer (II) | Rubber-like polymer latex | | | Monomer component (parts) | | | |
|---|---|---|---|---|---|---|---|
| | Type | Mass average particle size ($\mu$m) | Number of parts (solid fraction) | Acrylonitrile | Styrene | $\alpha$-methyl styrene | Methyl methacrylate |
| (II-1) | PBd | 0.35 | 50 | 13 | 37 | - | - |
| (II-2) | PBd | 0.35 | 20 | 20 | 50 | 10 | - |
| (II-3) | PBA | 0.28 | 50 | 10 | 35 | - | 5 |
| (II-4) | EPDM | 0.48 | 40 | 20 | 40 | - | - |
| PBd: polybutadiene PBA: poly(butyl acrylate) EPDM: ethylene-propylene-diene rubber | | | | | | | |

[Synthesis example 20] Production of polymers (III-1 to 4, and III-7 to 11)

Using a conventional suspension polymerization method, the various monomer components detailed in Table 8 were polymerized, yielding polymers (III-1 to 4, and III-7 to 11).

[Synthesis example 21] Production of polymer (III-5)

22 parts of acrylonitrile and 78 parts of $\alpha$-methylstyrene were polymerized using a conventional emulsion polymerization method, yielding a polymer (III-5) latex. Subsequently, this latex was solidified, dewatered, washed and dried in the same manner as example 65, yielding a powder of the polymer (III-5).

[Synthesis example 22] Production of polymer (III-6)

A conventional continuous solution polymerization method was used to produce a polymer (III-6) composed of 15 parts of acrylonitrile, 55 parts of styrene and 30 parts of N-phenylmaleimide.

[Table 8]

| Polymer (III) | Monomer component (parts) | | | | | | | Reduced viscosity (dL/g) |
|---|---|---|---|---|---|---|---|---|
| | Acrylonitrile | Styrene | α-methyl styrene | N-phenyl maleimide | Methyl methacrylate | Methyl acrylate | 2-hydroxyethyl methacrylate | |
| (III-1) | 29 | 71 | - | - | - | - | - | 0.6 |
| (III-2) | 25 | 75 | - | - | - | - | - | 0.5 |
| (III-3) | 40 | 60 | - | - | - | - | - | 0.5 |
| (III-4) | 5 | 95 | - | - | - | - | - | 0.6 |
| (III-5) | 22 | | 78 | - | - | - | - | 0.5 |
| (III-6) | 15 | 55 | - | 30 | - | - | - | 0.6 |
| (III-7) | 22 | 68 | - | - | 10 | - | - | 0.6 |
| (III-8) | 8 | 22 | - | - | 70 | - | - | 0.6 |
| (III-9) | - | - | - | - | 99 | 1 | - | 0.4 |
| (III-10) | - | - | - | - | 90 | 10 | - | 0.4 |
| (III-11) | - | - | - | - | 60 | 20 | 20 | 1.5 |

[Example 85]

40 parts of the graft copolymer (I), 60 parts of the polymer (III-1), 1 part of ethylene bisstearamide, 1 part of ADK STAB LA-77 (manufactured by Adeka Corporation), 0.3 parts of ADK STAB LA-36 (manufactured by Adeka Corporation), and 3 parts of titanium oxide (CR60-2, manufactured by Ishihara Sangyo Kaisha, Ltd.) as a colorant were mixed using a Henschel mixer, and the resulting mixture was molded using a vented biaxial extruder (PCM-30, manufactured by Ikegai, Ltd.) heated to a barrel temperature of 230˚C, thus producing pellets. The melt volume rate was measured for these pellets. The result is recorded in Table 9.

The thus obtained pellets were extruded in a sheet-like form from a T-die of width 60 mm using a 25 mmø uniaxial extruder (manufactured by TPIC Co., Ltd.), under conditions including a die temperature of 180˚C or 220˚C and a cooling roller temperature of 85˚C, and by appropriate adjustment of the winding speed, a sheet-like molded item of width 50 to 60 mm in which the thickness had been regulated to a value of 200 to 250 $\mu$m was molded. The Charpy impact strength, the gloss, and the surface appearance of the sheet-like molded item were evaluated. The results are detailed in Table 9. The Charpy impact strength was evaluated using a sample prepared by overlaying and then press molding a plurality of the sheets that had been molded at 180˚C.

[Examples 86 to 108, Comparative examples 25 to 30]

With the exception of altering the type and amounts of the graft copolymer (I), the graft copolymer (II) and the polymer (III) as detailed in Tables 9 and 10, sheet-like molded items were obtained in the same manner as example 85. The results are listed in Tables 9 and 10.
In comparative example 26, the screw stopped due to excessive loading, meaning the pellets could not be prepared.
[Table 9]

| | | Graft copolymer (I) | | Graft copolymer (II) | | Polymer (III) | | Charpy impact strength (kJ/m$^2$) | Melt volume rate (cm$^3$/10 min) | Molding condition dependency | | | |
| | | | | | | | | | | 180°C molding | | 220°C molding | |
| | | Type | Amount (parts) | Type | Amount (parts) | Type | Amount (parts) | | | Gloss (%) | Surface appearance | Gloss (%) | Surface appearance |
| Example | 85 | (I-1) | 40 | - | - | (III-1) | 60 | 22 | 12 | 14 | o | 35 | o |
| | 86 | (I-2) | 40 | - | - | (III-1) | 60 | 21 | 8 | 15 | o | 37 | o |
| | 87 | (I-3) | 40 | - | - | (III-1) | 60 | 24 | 10 | 14 | o | 28 | o |
| | 88 | (I-3) | 40 | - | - | (III-2) (III-10) | 27 33 | 9 | 11 | 12 | o | 19 | o |
| | 89 | (I-3) | 40 | - | - | (III-2) | 60 | 15 | 16 | 16 | o | 34 | o |
| | 90 | (I-3) | 30 | (II-1) | 10 | (III-1) | 60 | 29 | 16 | 17 | o | 36 | o |
| | 91 | (I-3) | 40 | - | - | (III-10) | 60 | 9 | 6 | 12 | Δ | 17 | o |
| | 92 | (I-4) | 40 | - | - | (III-1) | 60 | 11 | 23 | 21 | o | 38 | o |
| | 93 | (I-5) | 60 | - | - | (III-1) | 40 | 8 | 31 | 24 | o | 35 | o |
| | 94 | (I-6) | 20 | - | - | (III-1) | 80 | 10 | 15 | 18 | o | 30 | o |
| | 95 | (I-7) | 40 | - | - | (III-2) | 60 | 8 | 26 | 16 | o | 33 | o |
| | 96 | (I-8) | 40 | - | - | (III-1) | 60 | 18 | 9 | 18 | o | 31 | o |
| | 97 | (I-9) | 40 | - | - | (III-2) (III-9) | 27 33 | 10 | 9 | 14 | o | 21 | o |
| | 98 | (I-10) | 35 | - | - | (III-3) | 65 | 32 | 11 | 17 | o | 21 | o |
| | 99 | (I-11) | 40 | - | - | (III-1) (III-5) | 38 22 | 11 | 6 | 13 | o | 19 | o |

[Table 10]

| | | Graft copolymer (I) | | Graft copolymer (II) | | Polymer (III) | | Charpy impact strength (kJ/m²) | Melt volume rate (cm³/10 min) | Molding condition dependency | | | |
|---|---|---|---|---|---|---|---|---|---|---|---|---|---|
| | | | | | | | | | | 180°C molding | | 220°C molding | |
| | | Type | Amount (parts) | Type | Amount (parts) | Type | Amount (parts) | | | Gloss (%) | Surface appearance | Gloss (%) | Surface appearance |
| Example | 100 | (I-12) | 40 | - | - | (III-1) (III-6) | 46 14 | 8 | 6 | 12 | o | 18 | o |
| | 101 | (I-13) | 35 | - | - | (III-4) | 65 | 9 | 27 | 16 | o | 29 | o |
| | 102 | (I-14) | 40 | - | - | (III-1) | 60 | 11 | 8 | 9 | o | 14 | o |
| | 103 | (I-15) | 30 | (II-2) | 10 | (III-1) | 60 | 12 | 21 | 18 | o | 39 | o |
| | 104 | (I-16) | 30 | (II-3) | 10 | (III-1) | 60 | 26 | 15 | 15 | o | 32 | o |
| | 105 | (I-17) | 30 | (II-4) | 10 | (III-1) | 60 | 19 | 18 | 17 | o | 35 | o |
| | 106 | (I-18) | 40 | - | - | (III-7) | 60 | 21 | 12 | 16 | o | 29 | o |
| | 107 | (I-19) | 40 | - | - | (III-8) | 60 | 12 | 9 | 14 | o | 26 | o |
| | 108 | (I-20) | 40 | - | - | (III-1) | 60 | 26 | 10 | 14 | o | 28 | o |
| Comparative example | 25 | (I-3) | 5 | - | - | (III-1) | 95 | 3 | 35 | 48 | o | 70 | o |
| | 26 | (I-3) | 90 | - | - | (III-1) | 10 | Molding impossible | | | | | |
| | 27 | (I-21) | 40 | - | - | (III-1) | 60 | 5 | 11 | 10 | × | 16 | × |
| | 28 | (I-22) | 40 | - | - | (III-1) | 60 | 4 | 31 | 43 | o | 65 | o |
| | 29 | (I-25) | 40 | - | - | (III-1) | 60 | 13 | 8 | 8 | o | 51 | o |
| | 30 | - | - | (II-1) | 40 | (III-1) (III-11) | 40 20 | 5 | 4 | 5 | × | 8 | × |

[Example 109]

Using a mixture of 100 parts of a vinyl chloride resin (number average polymerization degree Pn=800), 2 parts of a stabilizer (dibutyltin maleate), 7 parts of an impact resistance assistant (METABLEN C201A, manufactured by Mitsubishi Rayon Co., Ltd.), 2 parts of a processing assistant (METABLEN P551, manufactured by Mitsubishi Rayon Co., Ltd.), and 1 part of a lubricant (butyl stearate) as a substrate material, and using the thermoplastic resin composition used in example 87 as a coating material, the substrate material was extruded from a 40 mmø uniaxial extruder manufactured by Nakatani Machinery Co., Ltd. at a barrel temperature of 190˚C, while the coating material was extruded from a 25 mmø uniaxial extruder manufactured by Ikegai, Ltd. at a barrel temperature of 190˚C, and a prismatic cylinder-shaped substrate material with the coating material coated thereon was extruded from a coating die having a width of 40 mm and a thickness of 10 mm, and was then subjected to sizing, yielding a prismatic cylinder-shaped profile extrusion molded item coated with the thermoplastic resin composition used in example 87. The surface gloss was 8%, and the molded item had a favorable surface appearance with no foreign matter defects or the like.

[Example 110] Production of graft copolymer (I-26)

A reaction vessel fitted with a reagent injection container, a jacket heater, and a stirrer was charged with:

170 parts of water (including the water within the enlarged rubber latex),
238 parts (solid fraction: 50 parts) of the rubber-like polymer latex (a-18)
0.5 parts of dipotassium alkenylsuccinate,
0.0005 parts of ferrous sulfate heptahydrate,
0.0015 parts of disodium ethylenediamine tetraacetate, and
0.3 parts of sodium formaldehyde sulfoxylate, and following thorough flushing of the inside of the reaction vessel with nitrogen, the internal temperature was raised to 75˚C under constant stirring. Subsequently, a mixture composed of:
10 parts of acrylonitrile,
30 parts of styrene, and
0.3 parts of t-butyl hydroperoxide was added dropwise to the reaction vessel over a period of 1.5 hours.

Following completion of the dropwise addition, the mixture was held at a temperature of 75˚C for one hour, and subsequently cooled, yielding a graft copolymer (I-26) latex.
The obtained graft copolymer (I-26) latex was solidified, dewatered, washed and dried in the same manner as example 65, yielding a powder of the graft copolymer (I-26).

[Example 111] Production of graft copolymer (I-27)

With the exception of altering the 0.0005 parts of ferrous sulfate heptahydrate and the 0.0015 parts of disodium ethylenediamine tetraacetate to 0 parts in each case, a powder of a graft copolymer (I-27) was obtained in the same manner as example 110.

[Example 112] Production of graft copolymer (I-28)

With the exception of replacing the rubber-like polymer latex (a-18) with the rubber-like polymer latex (a-19), a powder of a graft copolymer (I-28) was obtained in the same manner as example 111.

[Example 113] Production of graft copolymer (I-29)

With the exception of replacing the rubber-like polymer latex (a-18) with the rubber-like polymer latex (a-20), a powder of a graft copolymer (I-29) was obtained in the same manner as example 110.
[Table 11]

| | | Graft copolymer (I) | Enlarged rubber latex (a) | | | Monomer component (parts) | | Polymer structure | | |
| | | | Type | Mass average particle size ($\mu$m) | Number of parts (solid fraction) | Acrylo-nitrile | Styrene | Graft ratio (%) | Mass average molecular weight ($\times 10^3$) | Reduced viscosity (dL/g) |
|---|---|---|---|---|---|---|---|---|---|---|
| Example | 110 | (I-26) | (a-18) | 1.2 | 60 | 10 | 30 | 32 | 230 | 1.0 |
| | 111 | (I-27) | (a-18) | 1.2 | 60 | 10 | 30 | 39 | 390 | 1.2 |
| | 112 | (I-28) | (a-19) | 1.2 | 60 | 10 | 30 | 25 | 480 | 1.4 |
| | 113 | (I-29) | (a-20) | 1.2 | 60 | 10 | 30 | 43 | 140 | 0.6 |

[Examples 114 to 118]

With the exception of altering the type and amounts of the graft copolymer (I), the graft copolymer (II) and the polymer (III) as detailed in Table 12, sheet-like molded items were obtained in the same manner as example 85. The results of evaluating the molded items are listed in Table 12.
[Table 12]

| | | Graft copolymer (I) | | Graft copolymer (II) | | Polymer (III) | | Charpy impact strength (kJ/m$^2$) | Melt volume rate (cm$^3$/10 min) | Molding condition dependency | | | |
|---|---|---|---|---|---|---|---|---|---|---|---|---|---|
| | | | | | | | | | | 180°C molding | | 220°C molding | |
| | | Type | Amount (parts) | Type | Amount (parts) | Type | Amount (parts) | | | Gloss (%) | Surface appearance | Gloss (%) | Surface appearance |
| Example | 114 | (I-26) | 40 | - | - | (III-1) | 60 | 12 | 20 | 7 | o | 9 | o |
| | 115 | (I-26) | 40 | - | - | (III-10) | 60 | 9 | 7 | 9 | o | 11 | o |
| | 116 | (I-27) | 40 | | | (III-1) | 60 | 11 | 24 | 8 | o | 11 | o |
| | 117 | (I-28) | 40 | - | - | (III-1) | 60 | 10 | 18 | 9 | Δ | 13 | o |
| | 118 | (I-29) | 40 | - | - | (III-1) | 60 | 11 | 27 | 22 | o | 41 | o |

From the results of the above examples and comparative examples, the following facts were evident.

(1) The thermoplastic resin compositions of examples 85 to 108 and examples 114 to 118 exhibited favorable fluidity, and the resulting molded items exhibited good impact resistance, matte properties, and surface appearance. Further, even when the molding temperature conditions varied, the variation in the matte properties was minimal, and the molded items were extremely applicable as items that required matte properties. The examples 114, 115 and 116 were particularly superior resin compositions that yielded a low-gloss sheet-like molded item with good stability even when the molding temperature was changed, and the surface appearance of the molded item was also extremely favorable.

(2) The profile extrusion coated molded item of example 109 that used the thermoplastic resin of example 87 as a coating material had favorable matte properties and good surface appearance.

(3) The thermoplastic resin compositions of comparative examples 25 and 28 exhibited good fluidity, but the resulting molded items suffered from poor impact resistance and had significantly inferior matte properties regardless of whether the molding temperature was 180˚C or 220˚C, meaning these molded items were undesirable as items that required matte properties.

(4) The thermoplastic resin composition of comparative example 26 had extremely low fluidity making molding extremely difficult, and was therefore undesirable as a molding material.

(5) The molded item of comparative example 27 had low impact resistance, and the resulting molded item displayed bump-like external appearance defects on the surface of the item. These external appearance defects impaired the design properties of the molded item, making the item undesirable.

(6) The molded item of comparative example 29 exhibited favorable matte properties at a molding temperature of 180˚C, but the matte properties deteriorated when molding was performed at 220˚C. The thermoplastic resin composition of comparative example 29 is undesirable from an industrial perspective because the matte properties of the produced molded item vary depending on the actual molding conditions employed.

(7) Comparative example 30 is a thermoplastic resin composition using a conventional hydroxyl group-containing polymer as a delustering agent. Although the matte properties of the molded item and the molding temperature dependency were extremely favorable, the fluidity of the thermoplastic resin composition and the impact resistance of the molded item were poor, and the surface appearance of the molded item was rough, meaning the item was undesirable from an industrial perspective.

INDUSTRIAL APPLICABILITY

The enlarged rubber obtained using the production method of the present invention is useful as a raw material for a rubber-reinforced thermoplastic resin such as an ABS resin or ASA resin or the like that is capable of generating a molded item having favorable impact resistance and a superior surface appearance.

Furthermore, the molded item of the present invention exhibits the special effects described below, which have enormous value in terms of industrial application.

(1) The molded item of the present invention exhibits excellent mechanical strength such as impact resistance, has a surface appearance with minimal fish eyes or surface roughness, and has excellent matte properties.

(2) In particular, the balance between the impact resistance and the matte properties is of a very high level that has not been obtainable using conventional delustering agents, meaning the applicability of the molded item within all manner of industrial materials is excellent.

(3) When the molded item of the present invention is an extrusion molded item, the above effects are particularly favorable.

Moreover, the thermoplastic resin composition of the present invention exhibits excellent fluidity during molding, displays a broad range of molding temperatures across which a molded item having favorable matte properties can be obtained, and is capable of producing a molded item having excellent impact resistance. The balance between these properties is of an extremely high level that has not been obtainable using conventional thermoplastic resin compositions, meaning the applicability of the thermoplastic resin composition within all manner of industrial materials is excellent. The thermoplastic resin composition of the present invention can be used for molded items such as automobile components, construction materials, food dishes and utensils, toys, household electrical appliances, interior members, ship and boat members, and housings for electrical equipment, and is particularly suited to use in extrusion molded items.

**Claims**

1. A method of producing an enlarged rubber having a mass average particle size of 0.6 to 3 $\mu$m, said method comprising:

    enlarging a rubber-like polymer by mixing a rubber-like polymer latex (A), a condensed acid salt (B) and an acid group-containing copolymer latex (C), wherein
    an amount of said condensed acid salt (B) is within a range from 0.1 to 10 parts by mass relative to 100 parts by mass of a solid fraction of said rubber-like polymer latex (A),
    an amount of a solid fraction of said acid group-containing copolymer latex (C) is within a range from 0.1 to 10 parts by mass, and
    said acid group-containing copolymer latex (C) is a latex of an acid group-containing copolymer obtained by polymerizing, within water, a monomer mixture comprising 5 to 30% by mass of an acid group-containing monomer and 95 to 70% by mass of an unsaturated carboxylate ester-based monomer.

2. The method of producing an enlarged rubber according to claim 1, wherein said condensed acid salt (B) is a salt of pyrophosphoric acid and an alkali metal.

3. A graft copolymer, obtained by polymerizing 10 to 90 parts by mass of a monomer component comprising 50 to 100% by mass of an unsaturated carboxylate ester-based monomer, in presence of 10 to 90 parts by mass of an enlarged rubber, a combination of said enlarged rubber and said monomer component being 100 parts by mass, wherein
    said enlarged rubber has a mass average particle size of 0.6 to 3 $\mu$m, and is obtained by enlarging said rubber-like polymer by mixing a rubber-like polymer latex (A), a condensed acid salt (B) in an amount of 0.1 to 10 parts by mass per 100 parts by mass of a solid fraction of said rubber-like polymer latex (A), and an acid group-containing copolymer latex (C), in an amount equivalent to 0.1 to 10 parts by mass of a solid fraction of said copolymer latex per 100 parts by mass of a solid fraction of said rubber-like polymer latex (A), and
    said acid group-containing copolymer latex (C) is a latex of an acid group-containing copolymer obtained by polymerizing, within water, a monomer mixture comprising 5 to 30% by mass of an acid group-containing monomer and 95 to 70% by mass of an unsaturated carboxylate ester-based monomer.

4. The graft copolymer according to claim 3, wherein said rubber-like polymer latex (A) is a (meth)acrylate ester-based rubber latex.

5. A thermoplastic resin composition, comprising:

    3 to 70 parts by mass of a graft copolymer according to claim 3 or claim 4, and 30 to 97 parts by mass of a polymer (III) and/or another thermoplastic resin, a combination of said graft copolymer and said polymer (III) and/or said another thermoplastic resin being 100 parts by mass, wherein
    said polymer (III) is a polymer comprising no rubber-like polymers, obtained by polymerizing a monomer component comprising at least one monomer selected from the group consisting of unsaturated nitrile-based monomers, aromatic vinyl-based monomers and unsaturated carboxylate ester-based monomers.

6. The thermoplastic resin composition according to claim 5, wherein said another thermoplastic resin is a vinyl chloride resin.

**7.** A molded item produced by molding a thermoplastic resin composition according to claim 5 or 6.

**8.** The molded item according to claim 7 obtained by extrusion molding.

**9.** A molded item, comprising:

a coating layer formed from a thermoplastic resin composition according to claim 5 or 6 on a surface of a molded item body.

**10.** A graft copolymer obtained by polymerizing 10 to 90 parts by mass of a monomer mixture comprising:

3 to 50% by mass of an unsaturated nitrile-based monomer and 20 to 97% by mass of an aromatic vinyl-based monomer, in presence of 10 to 90 parts by mass of an enlarged rubber, a combination of said enlarged rubber and said monomer mixture being 100 parts by mass, wherein
said enlarged rubber has a mass average particle size of 0.6 to 3 $\mu$m, and is obtained by enlarging said rubber-like polymer by mixing a rubber-like polymer latex (A), a condensed acid salt (B) in an amount of 0.1 to 10 parts by mass per 100 parts by mass of a solid fraction of said rubber-like polymer latex (A), and an acid group-containing copolymer latex (C), in an amount equivalent to 0.1 to 10 parts by mass of a solid fraction of said copolymer latex per 100 parts by mass of a solid fraction of said rubber-like polymer latex (A), and
said acid group-containing copolymer latex (C) is a latex of an acid group-containing copolymer obtained by polymerizing, within water, a monomer mixture comprising 5 to 30% by mass of an acid group-containing monomer and 95 to 70% by mass of an unsaturated carboxylate ester-based monomer.

**11.** The graft copolymer according to claim 10, wherein said rubber-like polymer latex (A) is a (meth)acrylate ester-based rubber latex.

**12.** The graft copolymer according to claim 10 or 11, wherein
a graft ratio within said graft copolymer is within a range from 20 to 50% by mass, and
a mass average molecular weight for an acetone-soluble fraction within a graft rubber is within a range from 100,000 to 500,000.

**13.** A thermoplastic resin composition, comprising:
10 to 70% by mass of a graft copolymer (I) according to any one of claims 10 to 12, and 30 to 90% by mass of a polymer (III), wherein
said polymer (III) is a polymer comprising no rubber-like polymers, obtained by polymerizing a monomer component comprising at least one monomer selected from the group consisting of unsaturated nitrile-based monomers, aromatic vinyl-based monomers and unsaturated carboxylate ester-based monomers.

**14.** The thermoplastic resin composition according to claim 13, wherein said polymer (III) is a polymer obtained by polymerizing a monomer component comprising 3 to 50% by mass of an unsaturated nitrile-based monomer and 20 to 97% by mass of an aromatic vinyl-based monomer.

**15.** The thermoplastic resin composition according to claim 13, wherein said polymer (III) is a polymer obtained by polymerizing a monomer component comprising 50 to 100% by mass of an unsaturated carboxylate ester-based monomer.

**16.** The thermoplastic resin composition according to claim 13, wherein said polymer (III) is a mixture of a polymer obtained by polymerizing a monomer component comprising an unsaturated nitrile-based monomer and an aromatic vinyl-based monomer, and a polymer obtained by polymerizing a monomer component comprising an unsaturated carboxylate ester-based monomer.

**17.** The thermoplastic resin composition according to claim 16, wherein said polymer (III) is a mixture of a polymer obtained by polymerizing a monomer component comprising 3 to 50% by mass of an unsaturated nitrile-based monomer and 20 to 97% by mass of an aromatic vinyl-based monomer, and a polymer obtained by polymerizing a monomer component comprising 50 to 100% by mass of an unsaturated carboxylate ester-based monomer.

**18.** The molded item produced by molding a thermoplastic resin composition according to any one of claims 13 to 17.

**19.** The molded item according to claim 18 produced by extrusion molding.

**20.** The molded item, comprising:

a coating layer formed from a thermoplastic resin composition according to any one of claims 13 to 17 on a surface of a molded item body.

<table>
<tr><td colspan="2"><b>INTERNATIONAL SEARCH REPORT</b></td><td>International application No.<br>PCT/JP2008/064947</td></tr>
</table>

| A. CLASSIFICATION OF SUBJECT MATTER |
|---|

*C08C1/07*(2006.01)i, *C08F265/06*(2006.01)i, *C08L51/04*(2006.01)i, *C08L101/00*(2006.01)i

According to International Patent Classification (IPC) or to both national classification and IPC

| B. FIELDS SEARCHED |
|---|

Minimum documentation searched (classification system followed by classification symbols)
C08C1/00-1/16, C08J3/00-3/28, C08F265/06, C08L1/00-101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 56-45921 B2   (Mitsubishi Rayon Co., Ltd.),<br>29 October, 1981 (29.10.81),<br>Claims; column 3, line 32 to column 5, line 14;<br>example 1<br>(Family: none) | 1,2<br>3-20 |
| Y | JP 4-220452 A  (Mitsubishi Rayon Co., Ltd.),<br>11 August, 1992 (11.08.92),<br>Claims; Par. Nos. [0001], [0010], [0014],<br>[0018], [0020], [0021], [0032]; table 1;<br>Par. No. [0054]<br>(Family: none) | 3-20 |
| A | JP 8-59704 A  (Kaneka Corp.),<br>05 March, 1996 (05.03.96),<br>Full text<br>(Family: none) | 1-20 |

☒ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>     11 November, 2008 (11.11.08) | Date of mailing of the international search report<br>     25 November, 2008 (25.11.08) |
|---|---|
| Name and mailing address of the ISA/<br>     Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/064947

C (Continuation). DOCUMENTS CONSIDERED TO BE RELEVANT

| Category* | Citation of document, with indication, where appropriate, of the relevant passages | Relevant to claim No. |
|---|---|---|
| A | JP 56-166201 A (Mitsubishi Rayon Co., Ltd.), 21 December, 1981 (21.12.81), Full text (Family: none) | 1-20 |
| A | JP 8-259777 A (Mitsubishi Rayon Co., Ltd.), 08 October, 1996 (08.10.96), Full text (Family: none) | 1-20 |
| A | JP 7-157502 A (Sumitomo Dow Ltd.), 20 June, 1995 (20.06.95), Claims; Par. Nos. [0010], [0016] (Family: none) | 1-20 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007214714 A
- JP 2007235285 A
- JP 2007262083 A
- JP SHO423112 B
- JP HEI29601 B
- JP SHO5645921 B
- JP HEI1126301 B
- JP HEI3212401 B
- JP HEI859704 B
- JP SHO56166201 B
- JP HEI4220452 B
- JP SHO50051142 B
- JP SHO54117550 B
- JP SHO56036535 B
- JP SHO60049052 B
- JP HEI04345646 B
- JP HEI07314615 B
- JP HEI07316374 B
- JP SHO53071146 B
- JP SHO59161459 B
- JP SHO63086756 B
- JP SHO63297449 B
- JP HEI08073686 B
- JP HEI08253641 B
- JP HEI08199027 B
- JP 2000212293 A
- JP HEI02214712 B
- JP HEI02503322 W
- JP HEI11508960 W
- JP HEI09194656 B
- JP 2000198905 A
- JP SHO60018536 B
- JP SHO61236850 B
- JP SHO63156847 B
- JP SHO63156851 B
- JP HEI01056762 B
- JP HEI01101355 B
- JP HEI10219079 B